# EUROPÄISCHE PATENTANMELDUNG

(11) **EP 2 407 069 A1**
(43) Veröffentlichungstag der Anmeldung: **18.01.2012**
(21) Anmeldenummer: 10007164.6
(22) Anmeldetag: 12.07.2010
(51) Int. Cl.: A47J 31/54, F24H 1/16

(54) **Dynamischer Durchlauferhitzer**

(71) Anmelder: Bleckmann GmbH & Co. KG, 5112 Lamprechtshausen (AT)
(72) Erfinder: Reichl, Martin, 5120 St. Pantaleon (AT); Pleschinger, Andreas, 5205 Schleedorf (AT)
(74) Vertreter: Eisenführ, Speiser & Partner

(57) **Zusammenfassung**

Fluiderhitzer vom Typ Durchlauferhitzer mit einem Fluidkanal mit einem ersten Fluidkanalabschnitt (35), mindestens einem im Wesentlichen zylindrischen Metallrohr (2), einer Heizeinrichtung (6) mit bevorzugt mit zwei über äquidistante Umfangsabschnitte des Metallrohrs zueinander beabstandeten Rohrheizkörpern (6a, 6b), und einem Wärmeleitmittel zur wärmeleitenden Verbindung mit dem Metallrohr (2), wobei im Metallrohr (2) ein Fluidführungskern (30) aus Kunststoff angeordnet ist, der den ersten Fluidkanalabschnitt (35) zwischen dem Metallrohr und dem Fluidführungskern (30) ausbildet, wobei der erste Fluidkanalanschnitt (35) im Wesentlichen wendelförmig in Form einer Nut in einer Außenoberfläche des Fluidführungskerns verläuft, und wobei der Fluidkanal einen ersten Fluidanschluss für Fluidzufuhrmittel und einen zweiten Fluidanschluss für Fluidabfuhrmittel aufweist, wobei der Fluidführungskern (30) weiter einen, im Wesentlichen koaxial, in seinem Inneren angeordneten zweiten Fluidkanalabschnitt (34) aufweist, der mit dem ersten Fluidkanalabschnitt (35) in Reihe geschaltet ist. Im Bereich eines ersten Endes des Metallrohres (2) kann eine Fluidanschlussbaugruppe vorgesehen sein, die sowohl den ersten Fluidanschluss (24a) als auch den zweiten Fluidanschluss (24b) aufweist, sodass Fluidzufuhr und Fluidabfuhr im Bereich derselben Stirnseiten des Metallrohres (2) erfolgen. Im Bereich des zweiten Endes des Metallrohres (2) ist dann ein Verschlussstopfen (50) vorgesehen.

## Beschreibung

### Technisches Gebiet

Die Erfindung betrifft allgemein Fluiderhitzer, insbesondere solche vom Typ Durchlauferhitzer, für Haushaltsgeräte. Insbesondere betrifft die Erfindung einen besonders kompakten Fluiderhitzer mit hoher Heizleistung bei geringen Abmessungen.

### Hintergrund

Zur Erzeugung heißer Fluide, insbesondere heißen Wassers bzw. Dampfes, sind im Stand der Technik eine Vielzahl verschiedener Bauformen und Typen von Fluiderhitzern bekannt. Haushaltsgeräte, in denen Fluiderhitzer Anwendung finden, sind beispielsweise Dampfreiniger, Dampfbügeleisen, aber auch solche zur Zubereitung von Speisen und/oder Heißgetränken, wie Kaffeemaschinen, Espressomaschinen, Milchschäumer, Dampfgarer und Andere.

In solchen Geräten kommt es zumindest teilweise darauf an, in einer ohnehin kompakten Vorrichtung, d.h. bei beschränktem Innenraum, einen Fluiderhitzer zu integrieren, der mittels elektrischer Energie aus einem kalten Fluid ein heißes Fluid bzw. Dampf erzeugt. Insbesondere bei der Dampferzeugung hat die Fluidführung hierbei zudem Drücken, die ein Mehrfaches des atmosphärischen Druckes betragen zu widerstehen.

Die EP 1 321 708 zeigt einen Fluiderhitzer zur Heißwasser bzw. Dampferzeugung mit einer Fluidführung und einer Heizeinrichtung, wobei die Heizeinrichtung aus mindestens zwei Rohrheizkörpern besteht, die wärmeleitend mit dem flüssigkeitsführenden Rohr verbunden sind. Zur Erhöhung der Kontaktflächen zwischen der Heizeinrichtung und dem flüssigkeitsführenden Rohr sind das flüssigkeitsführende Rohr und die Rohrheizkörper mit einander angepassten Kontaktflächen ausgestattet, dergestalt, dass entweder die Rohrheizkörper im Wesentlichen konvexe Kontaktflächen und das flüssigkeitsführende Rohr im Wesentlichen entsprechend konkave Kontaktflächen aufweisen oder sowohl die Rohrheizkörper als auch das flüssigkeitsführende Rohr im Wesentlichen ebene Kontaktflächen aufweisen. Ebenso wie viele andere aus dem Stand der Technik bekannte Vorrichtungen wird zudem vorgeschlagen, die aus flüssigkeitsführendem Rohr und Heizeinrichtung bestehende Komponente in Form eines Strangpressprofils zu fertigen, wobei sich die beabsichtigte Kontaktflächengeometrie zwischen flüssigkeitsführendem Rohr und den Rohrheizkörpern ausbildet.

Hinsichtlich der Erzeugung hoher Heizleistungen auf engstem Raum ist bei Vorrichtungen des Standes der Technik gemein, dass möglichst ein hoher Anteil der Flüssigkeitsführung mit der Heizeinrichtung in gut wärmeleitenden Kontakt steht. Bisher ergab sich bei runden Querschnitten für die Fluidführung das Problem, dass das Verhältnis zwischen der beheizten Trennschichtfläche zum Fluidvolumen in der Fluidführung zu groß ist und sich eine kalte Kernströmung ausbildet. Dies erfordert relativ lange Fluidführungen für den Eintrag der für die gewünschte Fluidtemperatur erforderlichen Wärmeenergie. Beim oben diskutiertem Stand der Technik wird hierzu das Flüssigkeitsführungsrohr, das im Ursprungszustand einen kreisförmigen Querschnitt aufweist, bei der Herstellung deformiert, um den im Betrieb beheizten Querschnitt zu verringern. Dies erfordert einen entsprechenden Umformungsschritt bei der Herstellung.

### Kurze Zusammenfassung

Eine mögliche Aufgabe der Erfindung kann daher darin gesehen werden, einen Fluiderhitzer hinsichtlich seines Raumerfordernisses und bezüglich des Wärmeübergangs sowie der Temperaturführung zu verbessern, um einen besonders kompakten Fluiderhitzer bereitzustellen. Eine weitere oder alternative mögliche Aufgabe der Erfindung kann darin gesehen werden, das dynamische Verhalten eines gattungsgemäßen Fluiderhitzers in regelungstechnischer Sicht so zu verbessern, dass er regelungstechnisch eine möglichst kleine Totzeit bzw. Zeitkonstante aufweist.

Die vorgenannte Aufgabe wird durch einen Fluiderhitzer gemäß dem Anspruch 1 gelöst. Vorteilhafte Ausführungen und Weiterbildungen sind in den sich anschließenden Unteransprüchen angegeben.

Bevorzugter besteht das Metallrohr aus Edelstahl. Grundsätzlich hat jedoch Edelstahl den klaren Vorteil, dass hinsichtlich eines Einsatzes im Lebensmittelbereich keine Bedenken bestehen. Edelstahl weist zwar im Vergleich zu beispielsweise Aluminium eine deutlich schlechtere Wärmeleitungseigenschaft auf, jedoch ist gerade diese Eigenschaft beim erfindungsgemäßen Fluiderhitzer von Vorteil, wie im Folgenden verdeutlicht wird.

Erfindungsgemäß ist im Metallrohr ein Fluidführungskern, bevorzugt aus einem Kunststoff vorgesehen, der derart ausgestaltet ist, dass die hydraulische Länge des beheizten Fluidfluidkanals im Inneren des Metallrohres gegenüber der Metallrohrlänge wesentlich vergrößert ist. Hierzu weist der Fluidführungskern eine wendelförmig umlaufende Nut auf, deren Boden und Seitenflanken im Zusammenspiel mit der Metallrohrinnenseite einen ersten Fluidkanalabschnitt zur Fluidführung ausbilden, durch welchen das zu erhitzende Fluid strömen bzw. geführt werden kann. Gegenüber dem freien Querschnitt des bloßen Metallrohres weist der so ausgebildete erste Fluidkanalabschnitt einen um ein Vielfaches verringerten Querschnitt auf, seine hydraulische Länge ist aber deutlich länger als das Metallrohr. Hierbei führt die gegenüber dem Metallrohr verringerte Querschnittsfläche zu einer geringeren zu erhitzenden Fluidmasse pro Längeneinheit. Zusätzlich erhöht die wendelförmige Fluidführung die Verweildauer des zu erhitzenden Fluids an der beheizten Metallrohrinnenfläche erheblich. Somit wird eine intensivere und gleichmäßigere Erhitzung des Fluids durch den erfindungsgemäßen Fluiderhitzer ermöglicht.

Während sich für den Fluidführungskern besonders aus Kostengründen Kunststoff anbietet, ist es grundsätzlich auch möglich, Metall, Stein, Ton, Keramik oder ähnliche Materialien, insbesondere lebensmittelechte und hitzebeständige, in die vorstehend beschriebene Gestalt bringbare, Werkstoffe vorzusehen.

Indem der Fluiderhitzer durch den erfindungsgemäße Fluidführungskern erheblich in seiner Länge reduziert werden kann und für den Fluidführungskern Ausführungen aus anderen Materialien als Metall möglich sind, kann die Wärmekapazität des Fluiderhitzers deutlich verringert werden. Die ermöglicht, das dynamische Verhalten des Fluiderhitzers in regelungstechnischer Sicht deutlich zu verbessern und aufgabengemäß einen Durchflusserhitzer mit möglichst kleiner Totzeit bzw. Zeitkonstanten und somit besonders günstigem Temperaturführungsverhalten bereitzustellen.

Während sich die Wendelform für den durch den Fluidführungskern ausgebildeten ersten Fluidkanalabschnitt insbesondere in strömungstechnischer Hinsicht als vorteilhaft erwiesen hat, sind auch andere Formen für den Fluidkanal, wie z. B. eine in Längsrichtung des Fluidführungskerns oder auch in Querrichtung des Fluidführungskerns orientierte Mäanderform vorstellbar und herstellbar.

Als Heizeinrichtung eignen sich bekannte Aluminium-Rohrheizkörper, welche bevorzugt parallel zum Metallrohr an diesem angeordnet werden. Besonders bevorzugt sind mindestens zwei Rohrheizkörper als Heizeinrichtung vorgesehen, die einander bezüglich des Metallrohres gegenüberliegen, um die elektrisch in den Rohrheizkörpern erzeugte Wärme mit geringen Verlusten in das Metallrohr und anschließend in das Fluid einzutragen, ist die Oberfläche der Rohrheizkörper vorzugsweise konkav an die Oberfläche des im Wesentlichen zylindrischen Metallrohres angepasst.

Bezüglich der Heizeinrichtung und der von ihr umfassten Rohrheizkörper sei darauf hingewiesen, dass selbstverständlich auch mehr als zwei Rohrheizkörper vorgesehen werden können. Obwohl sich ein in Umfangsrichtung äquidistantes Anordnen der Rohrheizkörper bereits aus dem Aspekt einer effizienten und gleichmäßigen Wärmeleitung anbietet, kann fertigungstechnisch oder bauformbedingt eine alternative Anordnung angeraten sein, welche allesamt im Bereich der vorliegenden Erfindung liegen.

Als wärmeleitende Verbindung zwischen der Heizeinrichtung, beispielsweise den Rohrheizkörpern, und dem Metallrohr wird bevorzugt eine gut wärmeleitende Lötverbindung verwendet. In besonders bevorzugten Ausführungen, insbesondere bei einem dünnwandigen Metallrohr aus Edelstahl, umfasst die Heizvorrichtung zusätzliche Wärmeleitmittel, beispielsweise ein beispielsweise hülsenartig, um das Metallrohr angeordnetes Wärmeleitblech, die zusätzlich zur bereits durch die Verlötung verbesserte Wärmeleitung an den Kontaktflächen zwischen der Heizeinrichtung und dem Metallrohr die Wärme über den gesamten vom Wärmeleitmittel bedecken Umfang des Metallrohres verteilen. Das Wärmeleitmittel ist bevorzugt aus einem gut Wärme leitendem Material wie Kupfer, Aluminium bzw. Legierungen dieser Metalle oder dergleichen.

Die Wärmeleitmittel können den gesamten Umfang des Metallrohres umfassen oder auch, insbesondere um den Durchtritt von Flussmittel beim Lötvorgang zu gewährleisten, Durchbrüche aufweisen.

Die Wärmeleitmittel kompensiert erfindungsgemäß die schlechte Wärmeleitfähigkeit des Edelstahlrohrs, indem es die Wärme von den wenigstens zwei Rohrheizkörpern schnell um das Edelstahlrohr verteilt und so das Edelstahlrohr quasi über den Gesamten Umfang beheizt werden kann. Damit kann mit dem Metallrohr aus einem schlecht Wärme leitendem Material, wie beispielsweise Edelstahl, und dem Wärmeleitmittel aus einem gut Wärme leitenden Material, wie beispielsweise Aluminium oder Kupfer oder einer Legierung davon, die Wärmeverteilung im Metallrohr durch die Form des Wärmeleitmittels gesteuert werden. Insbesondere hinsichtlich der später noch zu diskutierenden Verschlusstopfen bzw. eine Endkappe und Fluidanschlussbaugruppen sei bereits an dieser Stelle darauf hingewiesen, dass der Dimensionierung der Wärmeleitmittel in axialer Richtung, d.h. in Längsrichtung, des Metallrohres eine besondere Bedeutung und Schutzfunktion, insbesondere im Fehlerfall, zukommt.

In bevorzugten Ausführungen ist mindestens ein Rohrheizkörper als Hochleistungsrohrheizkörper ausgebildet. Unter "Hochleistungsrohrheizkörper" sei hierbei jede Art von Rohrheizkörpern verstanden, deren Aufbau die Wandlung hoher elektrischer Leistung in Wärme ermöglicht. Ein derartiger Hochleistungsrohrheizkörper kann eine sogenannte "Doppelwendel" aufweisen, die in einem elektrisch isolierenden, gut wärmeleitenden Material, beispielswiese verdichtetem Magnesiumoxid, eingebettet ist. Im Gegensatz zu herkömmlichen Rohrheizkörpern ist der bzw. sind die Heizwendeldurchmesser der Hochleistungsrohrheizkörper im Verhältnis zum Innendurchmesser des Mantelrohres hoch, so dass aufgrund einer verringerten Wärmeleitstrecke zwischen Heizwendel und der Außenseite des Mantelrohres höhere elektrische Leistungen als Wärme abgegeben werden können.

Der lichte Durchmesser, d.h. der Innendurchmesser, der Rohrheizkörper beträgt bevorzugt 8 mm. Die Aussendurchmesser liegen bevorzugt im Bereich von 10 mm bis 12 mm, wobei eine Heizleistung bezogen auf die Länge des beheizten Bereiches des Mantelrohres von 25 Watt/cm² bis 30 Watt/cm² ermöglicht wird. An der Auflagefläche zum Metallrohr bzw. Wärmeleitmittel werden 35 bis 45 W/cm² erreicht.

Die Anschlussenden der Rohrheizkörper können zur besseren Kontaktierung von der Oberfläche des Metallrohres weg gekröpft sein und in diesem Anschlussbereich so genannte kalte Enden aufweisen. Im Bereich der Kröpfung ist die Heizwendel bevorzugt konisch geformt, wobei sie von einem größeren Durchmesser im Heizbereich in einen kleiner Durchmesser im Anschlussbereich übergeht. Dadurch wird negativen Auswirkungen der Kröpfung auf die zentrale Lage der Heizwendel im Inneren des Rohrheizkörpers entgegengewirkt bzw. eine Zugentlastung erreicht und eine lokale Querschnittsverringerung der Wendel vermieden.

Je nach Dimensionierung der Seitenwand und der Bereite des den Fluidführungskern umlaufenden ersten Fluidkanalabschnitts können Ganghöhen, d.h. Steigungen, realisiert werden, welche eine Verdopplung bzw. Verdreifachung der hydraulischen Länge des Fluidkanals gegenüber der Länge des Metallrohres ermöglichen. Dieser Zusammenhang stellt sich besonders anschaulich dar, wenn längs zum Fluidführungskern orientierte Mäander vorgesehen werden, deren einzelne lineare Abschnitte (von den sie verbindenden bogenförmigen Abschnitten abgesehen) bereits nahezu die gesamte Länge des vom Fluidführungskern durchsetzten Metallrohres aufweisen. Hierbei ergibt sich in Umfangsrichtung des Metallrohres eine stufenweise steigende Fluidtemperatur, die bei der bevorzugten Ausbildung als Helix, d.h. Schraubenlinie, im Gegensatz hierzu in Längsrichtung auftritt.

Somit können bei einer ungleichmäßigen Anordnung von Rohrheizkörpern am Umfang des Metallrohres und Verwendung einer mäanderförmigen Fluidkanalführung im Fluidführungskern durch eine entsprechende Anordnung von Fluidein- und -austritten in Umfangsrichtung relativ zu den vorgesehenen Rohrheizkörpern die Temperaturverhältnisse, insbesondere die Temperaturgefälle zwischen der Heizeinrichtung und der Fluidführung gezielt beeinflusst werden.

In einer Weiterbildung sind das Metallrohr sowie die Heizeinrichtung, d.h. Heizkörper und ggf. vorhandene Wärmeleitmittel, durch eine Montagehalterung umfasst. Die Montagehalterung kann z.B. aus einem Blechstanzteil gefertigt sein und klammerartige Strukturen aufweisen, mittels derer sich die Heizeinrichtung bereits vor einem bevorzugt gemeinsamen Lötvorgang am Metallrohr bzw. an den Wärmeleitmitteln festlegen, insbesondere positionieren lassen. Die Montagehalterung ist bevorzugt aus demselben Material wie die Wärmeleitmittel gefertigt, kann aber auch aus einem anderen Material sein. Die Wärmeleitung aus den die Heizeinrichtung umfassenden Klammern an die Oberfläche des Metallrohres bzw. an die Wärmeleitmittel wird dadurch begünstigt, dass die Klammern als ein Abschnitt der Montagehalterung am Metallrohr und/oder dem Wärmeleitmittel anliegen. Bevorzugt weist die Montagehalterung zwei Klammerabschnitte auf, wobei zwischen diesen beiden Abschnitten ein im Wesentlichen ebener Montageabschnitt der Montagehalterung liegt, der nicht flächig an der zylindrischen Außenfläche des Metallrohres bzw. den Wärmeleitmitteln anliegt.

Der Montageabschnitt dient bevorzugt u.a. zur Montage einer Sicherungseinrichtung, bevorzugt einer Doppelsicherung, die als elektrische Anschlussvorrichtung für elektrischen Anschlussleitungen der wenigstens zwei Rohrheizkörper dient und die hinführenden und wegführenden Leitungswege bei Überschreiten einer Höchsttemperatur unterbricht, sowie wenigstens eines Temperatursensors, bevorzugt eines NTC-Sensors.

Der Montageabschnitt liegt an der Heizeinrichtung bzw. den Wärmeleitmitteln bzw. an dem Metallrohr nicht vollflächig an. Insofern als der Montageabschnitt eine im Wesentlichen ebene Gestalt aufweist, kann er im Wesentlichen linienförmige Kontaktabschnitte mit den zylindrischen Oberflächenabschnitten der Heizkörper sowie der Wärmeleitmittel aufweisen. Auf diese Weise bietet die Montagehalterung einerseits für die abschnittsweise vorteilhafte Wärmeleitungsfunktion zwischen den Rohrheizkörpern bzw. dem Metallrohr und der Sicherungseinrichtung (z.B. Doppelsicherung) sowie dem Temperatursensor (z.B. NTC-Sensor), andererseits für die ebenfalls abschnittsweise vorteilhafte ebene Geometrie zur mechanischen Festlegung einer elektrischen Anschlussvorrichtung entsprechende Sektionen in nur einem Bauteil.

Wie vorstehend angemerkt, stellt der Montageabschnitt eine ebene Auflagefläche für beispielsweise einen NTC-Sensor bzw. eine Doppel-Sicherung bereit. Hierbei ist die laterale Wärmeleitung der Wärmeleitmittel bzw. der ebenfalls gut die Wärme leitenden Klammer ausreichend, damit ein NTC-Sensor bzw. eine Doppel-Sicherung die Temperatur der Heizeinrichtung messen bzw. "fühlen" können.

Nicht nur zur Montage elektrischer Einrichtungen auf der Montagehalterung, sondern auch zur Befestigung des Fluiderhitzers als Bauteil innerhalb eines eingangs genannten Haushaltsgerätes sind an der Montagehalterung zusätzlich Durchbrüche, Laschen, Ausnehmungen und andere zur Befestigung der Komponente geeignete strukturelle Merkmale möglich.

Wie oben angemerkt, dienen die Anschlüsse der elektrischen Sicherungseinrichtung gleichzeitig als Anschlusspunkte für die Anschlussleitungen zur Verbindung der Rohrheizkörper mit einer elektrischen Stromquelle. Auf dem Montageabschnitt kann aber auch als vorteilhafte Weiterbildung eine elektrische Anschlussvorrichtung vorgesehen sein, die eingerichtet ist, Leitungen für verschiedene, an dem Fluiderhitzer abzunehmende oder anzulegende elektrische Signale räumlich zusammenzufassen und diese der Peripherie, insbesondere einer Steuerung des Fluiderhitzers zuzuführen bzw. von der Peripherie an den Fluiderhitzer weiterzuleiten. Besonders bevorzugte Ausführungen der elektrischen Anschlussvorrichtung sind beispielsweise Flachstecker, die durch entsprechend leitungsseitig vorgesehene Steckverbinder, wie z.B. Klemmelemente oder andere, die Flachstecker der elektrischen Anschlussvorrichtung umfassende Steckelemente, mechanisch und elektrisch zuverlässig kontaktiert werden. Auch kann ein Gruppenstecker als elektrische Anschlussvorrichtung die Energieleitungen für die elektrischen Rohrheizkörper, den oder die Erdungskontakte sowie Signalleitungen für den Anschluss der Temperatursensoren und des Sicherheitstemperatursensors zusammenfassen.

Um eine Beschädigung der verwendeten Kunststoffbauteile zu vermeiden, empfiehlt es sich, die verwendeten Kunststoffteile insbesondere im Falle eines möglichen Kontaktes mit thermisch hoch belasteten Bauteilabschnitten (wie z.B. der Heizeinrichtung) des Fluiderhitzers entsprechend temperaturbeständig auszuführen. Ein für die Isolation der elektrischen Leitungen mögliches Material, welches die erforderliche Temperaturfestigkeit aufweist, ist z.B. Silikon.

An den Montageabschnitt zur Befestigung der elektrischen Anschlussbaugruppe können sich zusätzlich weitere Abschnitte zur mechanischen Befestigung des Fluiderhitzers in einem Haushaltsgerät anschließen. Diese ziehen dabei zusätzlich Wärmeenergie aus dem Montageabschnitt für die Befestigung der elektrischen Anschlussvorrichtung und geben sie an die Umgebung ab. Dies verringert auch die Anforderungen an die Wärmefestigkeit bzw. Formbeständigkeit derjenigen Struktur des Hausgeräts, an welchem die Baugruppe befestigt werden soll.

An einem ersten Ende des Metallrohres des erfindungsgemäßen Fluiderhitzers kann eine erste Fluidanschlussbaugruppe vorgesehen werden, die zumindest einen ersten Fluidanschluss für Fluidzufuhrmittel aufweist. Die Fluidanschlussbaugruppe hat zur Aufgabe, zwischen den unterschiedlichen Querschnitten der Fluidzufuhrmittel und des Metallrohres druck- und fluiddicht zu vermitteln. Am ersten Fluidanschluss der Fluidanschlussbaugruppe kann ein Fluidführungsmittel aufgesteckt werden und z.B. mittels bekannter Rastverbindungen auf diesem befestigt werden. Die Fluidanschlussbaugruppe leitet das eingeleitete Fluid in das Metallrohr, dessen eines offenes Ende es hierzu (vom freien Querschnitt des ersten Fluidanschlusses abgesehen) hermetisch abschließt. Um den ggf. im Metallrohr herrschenden Fluiddruck auszuhalten, ist eine besonders belastbare Verbindung zwischen dem Metallrohr und der Fluidanschlussbaugruppe vorzusehen.

Diese kann beispielsweise dadurch hergestellt werden, dass ein Teil der Fluidanschlussbaugruppe, insbesondere mit einer umlaufenden Dichtung, in ein Ende des Metallrohres eingesteckt wird und der überlappende Rand des Metallrohres beispielsweise durch einen Press- oder Falzvorgang derart plastisch verformt wird, dass der Rohrrand einen umlaufenden Steg an der Fluidanschlussbaugruppe hinterschneidet.

Alternativ kann ein Teil der Fluidanschlussbaugruppe von Außen auf das Metallrohr gesteckt werden, d.h. das Metallrohr buchsenartig umschließen und gegenüber dem Metallrohr mit einer Dichtung abdichten.

Am der ersten Fluidanschlussbaugruppe gegenüberliegenden Ende des Metallrohres kann eine zweite Fluidanschlussbaugruppe vorgesehen sein, die dann vorzugsweise einen identischen Aufbau wie die erste Fluidanschlussbaugruppe aufweist. Die Befestigung der zweiten Fluidanschlussbaugruppe kann dann im Wesentlichen identisch zur ersten Fluidanschlussbaugruppe ausgelegt werden. Beide Fluidanschlüsse, insbesondere der Fluidanschluss für die Fluidabfuhr, können im Wesentlichen kreisscheibenförmige lichte Querschnitte zur Fluidführung aufweisen, auf deren Vorteile weiter unten eingegangen wird.

In einer besonderen Weiterbildung ist innerhalb des Fluidführungskerns ein zweiter Fluidkanalabschnitt zur Fluidführung ausgebildet. Der zweite Fluidkanalabschnitt kann im Wesentlichen zylindrische Gestalt aufweisen. Bevorzugt ist der zweite Fluidkanalabschnitt dem ersten Fluidkanalabschnitt über eine entsprechende Durchführung bzw. einen Durchbruch im Fluidführungskern verbunden, d.h. in Reihe geschaltet. Somit durchströmt das zu erhitzende Fluid zunächst einen der beiden Kanäle, um nachfolgend den jeweils anderen Fluidkanalabschnitt zu durchströmen. Eine solche einseitige Anordnung von sowohl Fluidzufuhr als auch Fluidabfuhr kann insbesondere vorteilhaft in Bezug auf die vorzunehmenden Montage- bzw. Fertigungsschritte und den Platzbedarf im Haushaltsgerät (z.B. in der Kaffeemaschine) sein.

In bevorzugter Ausführung durchströmt das zu erhitzende Fluid zunächst das Innere des Fluidführungskerns (den ersten Fluidkanalabschnitt), wird in im Wesentlichen radialer Richtung mittels des Durchbruchs im Fluidführungskern zur Außenseite des Fluidführungskerns durchgeführt, um den zweiten Fluidkanalabschnitt in Kontakt mit der beheizten Metallrohrinnenfläche zu durchströmen und dabei auf die gewünschte Temperatur erhitzt zu werden.

Im Falle eines wendelförmig bzw. helixförmig geführten zweiten Fluidkanalabschnitts auf der Außenseite des Fluidführungskerns bietet sich hierbei die Fluidabfuhr auf derselben Seite an, auf welcher die Fluidzufuhr erfolgt. Im Falle eines mäanderförmigen Fluidkanals hängt die Seite der Fluidabfuhr von der Durchströmungsrichtung des zuletzt durchströmten Mäanders ab, sodass auch bei einer mäanderförmigen Führung des äußeren Fluidkanalabschnittes grundsätzlich beide Seiten für die Fluidabfuhr technisch realisierbar sind.

Die Verwendung der erfindungsgemäßen Fluidanschlussbaugruppen erübrigt zum Einen eine Durchbrechung des Metallrohres zur Fluidzufuhr bzw. zur Fluidabfuhr. Lediglich zur Befestigung der jeweiligen Anschlussbaugruppe an den Stirnseiten des Metallrohres kann eine Metallbearbeitung - wie das oben beschriebene Falzen - erforderlich sein. Mithin können Schwächungen und Maßnahmen zur weiteren Abdichtung des Druckbehälters entfallen. Des Weiteren führt dieser Aufbau quasi automatisch zu eine sehr kompakten Bauform für den Durchflusserhitzer, da das Metallrohr nur geringfügig länger als sein beheizter Abschnitt sein muss.

Hinsichtlich der Temperaturfestigkeit der bevorzugter Weise aus Kunststoff gefertigten Fluidanschlussbaugruppen können Wärmeleitungsstrecken innerhalb des Fluiderhitzers durch die Dimensionierung der Wärmeleitmittel auf dem Metallrohr so dimensioniert werden, dass, insbesondere im Falle einer Überhitzung, zur Absicherung des Fluiderhitzers vorgesehene Temperatursensoren bzw. Sicherheitstemperaturbegrenzer ansprechen, bevor die Festigkeitsgrenze der jeweiligen Fluidanschlussbaugruppe bzw. ihrer Verbindung mit dem Metallrohr erreicht ist. So könne die Enden des Metallrohres ausreichend von der Wärmezufuhr entkoppelt werden, indem das Wärmeleitmittel erst mit einem hinreichenden Abstand zu den Fluidanschlussbaugruppen auf dem Metallrohr vorgesehen sind.

Gemäß einer besonders bevorzugten Ausführung ist die Fluidanschlussbaugruppe bzw. sind die Fluidanschlussbaugruppen bzw. bei einseitiger Anordnung von Fluidzulauf und -ablauf am anderen Ende der Verschlussstopfen mittels Falzung der jeweiligen End- bzw. Stoßkante des Metallrohres durch eine Hinterschneidung formschlüssig mit der jeweiligen Anschlussbaugruppe verbunden. Somit stützen sich die jeweiligen Elemente von Innen bei Druckbelastung gegen den jeweiligen Falz ab.

Unter einer "Falzung" sei in diesem Zusammenhang ein plastisches Umformen des Metallrohres zur Ausbildung der Hinterschneidung beispielsweise durch eine Reduzierung des Durchmessers des Metallrohrendes verstanden. Es sei angemerkt, dass die Falzung nicht vollständig das gesamte Metallrohrende umlaufen muss, vielmehr wurde festgestellt, dass auch die Falzung eines Teilbereiches der Metallrohrendkante ausreicht. Bevorzugt ist zwischen der Anschlussbaugruppe und dem Metallrohr eine Dichtungseinrichtung vorgesehen, die vom Metallrohr umschlossen wird.

In einer vorteilhaften Weiterbildung ändert sich die auf der Außenseite des Fluidführungskerns angeordnete Nut hinsichtlich der Tiefe in Strömungsrichtung bzw. in Richtung der Fluidabfuhr. D.h., der erste Fluidkanalabschnitt nimmt zumindest abschnittsweise in der Tiefe zu und/oder in der Breite abnimmt. Mit dieser Maßnahme wird zwar die Strömungsgeschwindigkeit im Fluidkanal, der gegen Ende ohnehin nicht mehr im Kontaktbereich der Heizeinrichtung liegt, durch eine kontinuierliche oder abschnittsweise Tiefenzunahme reduziert, aber aufgrund der Erhöhung des Strömungsquerschnitts gegen ein Verstopfen mit Kalkpartikeln geschützt. Da eine in radialer Richtung erfolgende Fluidabfuhr über den senkrecht zum Fluidführungskern ausgebildeten zweiten Fluidanschluss vorgesehen sein kann, bietet die Tiefenzunahme im ersten Fluidkanalabschnitt hinsichtlich der Umlenkung des Fluidstroms strömungsmechanische Vorteile. Mithin können Fluidreibungsverluste im Endbereich des Fluidkanals, wo die parallel zum Umfang des Fluidführungskerns gerichtete Strömung in eine radiale Richtung umgelenkt wird, gesenkt werden, da sich der mittlere Radius der Umlenkung erhöht, wodurch auch unerwünschte Strömungsgeräusche reduziert werden.

Mit der Temperaturzunahme, die in gattungsgemäßen Einrichtungen zwischen Fluidzu- und Fluidablauf beabsichtigt ist, geht bekanntermaßen auch eine Volumenzunahme des Fluids einher. Mit anderen Worten nimmt dieselbe betrachtete Fluidmasse im Bereich des Zulaufs, wo ihre Temperatur im Wesentlichen noch nicht erhöht worden ist, ein geringeres Volumen ein, als im Bereich des Fluidauslasses. Ein im Wesentlichen konstanter Fluidkanalquerschnitt führt somit bereits thermodynamisch bedingt zu einer sich in Flussrichtung erhöhenden Strömungsgeschwindigkeit des Fluids, was einem Kalkansatz im beheizten Bereich vorteilhafter Weise entgegenwirkt. Verlässt das Fluid anschließend den direkt beheizten Bereich des Fluidkanals, ist ein Kalkansatz jedoch weniger wahrscheinlich, weshalb auf hohe Geschwindigkeiten zugunsten einer verringerten Verstopfungsgefahr und geringeren Strömungsverlusten, die sich insbesondere durch Kavitationsvorgänge und strömungsinduzierten Lärm äußern, verzichtet werden kann.

Die vorliegende Aufgabe wird zudem auch durch eine erfindungsgemäße Fluidanschlussbaugruppe gemäß Anspruch 14 gelöst. Vorteilhafte Ausführungen und Weiterbildungen sind in den sich anschließenden Unteransprüchen angegeben.

Die erfindungsgemäße Fluidanschlussbaugruppe kann an einem erfindungsgemäßen Fluiderhitzer, insbesondere gemäß einem der vorstehend beschriebenen Ausführungen, vorgesehen werden. Auch die erfindungsgemäße Fluidanschlussbaugruppe kann vorteilhafter Weise aus Kunststoffelementen gefertigt werden, um die Fertigung zu vereinfachen und zudem Kosten und Gewicht zu senken.

Der erste und der zweite Fluidanschluss dienen der Befestigung von Fluidführungsmitteln, die häufig durch entsprechende Schläuche, Rohre oder ähnliches gebildet werden. Entsprechend können die Fluidanschlüsse als Rohrstutzen ausgeführt werden, auf deren Außenseite Riffelungen, Stege, Nuten oder dergleichen zur sicheren Befestigung der Fluidführungsmittel vorgesehen werden können. An ihren Enden weisen die Fluidführungsmittel mitunter Steckeinrichtungen mit Verrastungs- oder Verriegelungselementen auf.

Für die druckführenden Fluidführungsmittel und -anschlüsse werden besonders druckresistente Verbindungen vorgeschlagen, bei denen durch formschlüssig hintergreifende Splintsicherungen ein Lösen der Bauteile voneinander verhindert wird. Auf eine solche Vorrichtung wird in Zusammenhang mit den Figuren noch genauer eingegangen.

Sofern die Fluidzufuhr über einen im Inneren des Fluidführungskerns gelegenen zweiten Fluidkanalabschnitt erfolgt, kann der erste Fluidanschluss zur weiteren Reduktion der Teilevielfalt und -anzahl als integraler Bestandteil des Fluidführungskerns vorgesehen werden. Für die Integration des zweiten Fluidanschlusses kann, um den zum ersten Fluidanschluss benachbarten Bereich des Fluidführungskerns, insbesondere also um denjenigen Teil, der sich in einem unbeheizten Abschnitt des Fluiderhitzers befindet, ähnlich der Anordnung eines Scharniers, eine hülsen- bzw. buchsenartige Struktur vorgesehen werden, die an ihrer Innenseite gegen den für die Fluidzufuhr vorgesehenen ersten Fluidanschluss abgedichtet ist und auf der dem ersten Fluidanschluss gegenüberliegenden Außenseite fluiddicht mit dem Metallrohr verbunden ist. An der Buchse bzw. Hülse kann der für die Fluidabfuhr vorgesehene zweite Fluidanschluss als integrale Komponente gebildet, insbesondere angeformt sein.

Besonders vorteilhaft können die beiden gegeneinander abzudichtenden Komponenten der integralen Fluidanschlussbaugruppe jeweils als einstückige Spritzgussteile gefertigt werden. Beim Zusammenbau, also bei der Vormontage, wird die hülsen- bzw. buchsenartige Struktur mit dem zweiten Fluidanschluss auf den ersten Fluidanschluss und den Fluidführungskern aufgeschoben und mit diesem bevorzugt mittels einer formschlüssigen Verbindungseinrichtung verbunden. Dies kann vorteilhafter Weise über eine Bajonettverbindung oder eine eingängige Schraubverbindung geschehen. Wichtig hierbei ist eine gezielte, d.h. exakte, relative Positionierung der beiden Bauteile zueinander. Letzteres insbesondere deshalb, da der auf der Außenseite des Fluidführungskerns ausgebildete Fluidkanal mit seinem Endabschnitt so gegenüber der Buchse bzw. Hülse anzuordnen ist, dass das Fluidkanalende ohne Stauung mit dem zweiten Fluidanschluss kommunizieren kann.

Für eine strömungsmechanisch günstige Gestaltung des Übergangs zwischen dem wendelförmigen Fluidkanal auf dem Fluidführungskern und dem freien Querschnitt des zweiten Fluidanschlusses ist es hierbei einerseits notwendig, beide Kanäle über einen möglichst großen freien Querschnitt miteinander zu verbinden, andererseits dem strömenden Fluid keine Prallkante bzw. Staukante in Strömungsrichtung entgegenzusetzen. Es ist daher vorteilhaft, den durch das Fluidkanalende im Fluidführungskern vorgegebenen freien Querschnitt mindestens auch im zweiten Fluidanschluss nahezu vollständig als freien Querschnitt vorzusehen. Strömungsmechanische Verluste, Kavitation und unerwünschte Geräuschentwicklung können so wirksam vermindert bzw. verhindert werden.

Die auf dem Fluidführungskern bzw. dem ersten Fluidanschluss umlaufenden Dichtmittel können beispielsweise aus NBR (Nitril-Butadien), LSR (Silikon), FFKM (perfluorierte Elastomere), einem Hochleistungs-Fluorelastomer, EPDM (Ethylen-Propylen-Kautschuk), FKM (Fluorkarbon) oder einem TPE (thermoplastischen Elastomer) bestehen. Entsprechende Werkstoffe können auch für die Abdichtung zwischen der Fluidanschlussbaugruppe und dem Metallrohr Verwendung finden.

### Kurzbeschreibung der Zeichnungsfiguren

Die vorgenannten Ausführungsbeispiele und Merkmale der Erfindung sowie weitere vorteilhafte Ausgestaltungen bzw. Weiterbildungen werden im Folgenden anhand von Zeichnungsfiguren erläutert. Die innerhalb der Beschreibung verwendeten Begriffe "links", "rechts", "oben", bzw. "unten" beziehen sich auf die jeweilige Zeichnungsfigur in einer Ausrichtung mit normal lesbaren Figurenbezeichnung und Bezugszeichen. Es zeigt:
- Fig. 1: ein Metallrohr mit Heizeinrichtung für einen erfindungsgemäßen Fluiderhitzer;
- Fig. 2a: ein Metallrohr mit Heizeinrichtung und Montagehalterung eines erfindungsgemäßen Fluiderhitzers;
- Fig. 2b: ein Metallrohr mit Heizeinrichtung und alternativer Montagehalterung sowie einem geometrisch abgewandelten Wärmeleitmittel eines erfindungsgemäßen Fluiderhitzers;
- Fig. 3: die in Fig. 2a gezeigte Baugruppe erweitert um einen Sicherheitstemperaturbegrenzer und eine elektrische Sicherungseinrichtung;
- Fig. 4: die in Fig. 3 gezeigte Baugruppe erweitert um eine erfindungsgemäße Fluidanschlussbaugruppe;
- Fig. 5: eine Draufsicht auf den Fluiderhitzer der Fig. 4;
- Fig. 6: eine Schnittdarstellung durch Fluiderhitzer der Fig. 5;
- Fig. 7: einen Fluidführungskern für einen erfindungsgemäßen Fluiderhitzer;
- Fig. 8a: eine Schnittdarstellung durch eine erfindungsgemäße Fluidanschlussbaugruppe des in Fig. 5 dargestellten Fluiderhitzers;
- Fig. 8b: eine Schnittdarstellung durch eine alternative erfindungsgemäße Fluidanschlussbaugruppe;
- Fig. 9: eine Schnittdarstellung durch einen Verschlussstopfen bzw. eine Endkappe des in Fig. 5 dargestellten Fluiderhitzers; und

- Fig. 10: eine Komponenten- bzw. Teileübersicht eines weiteren Ausführungsbeispiels eines erfindungsgemäßen Fluiderhitzers.

### Detailierte Beschreibung der Zeichnungsfiguren

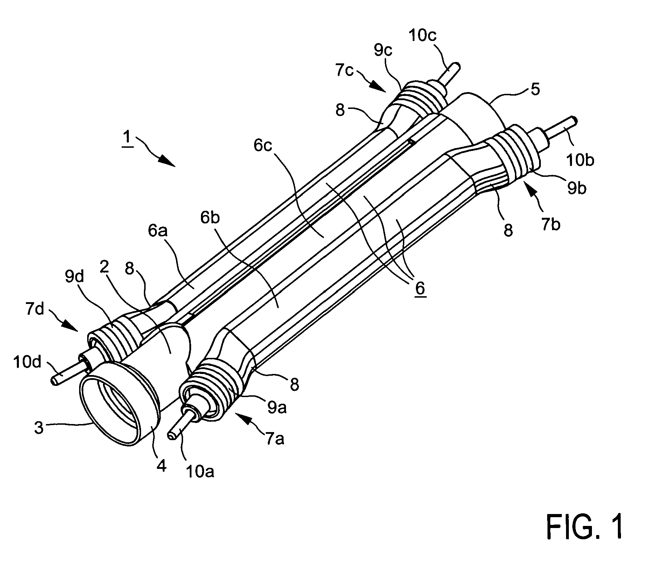

Fig. 1 zeigt als Grundelemente eines erfindungsgemäßen Fluiderhitzers 1, ein Metallrohr 2 und eine Heizeinrichtung 6 bestehend aus zwei identischen Rohrheizkörpern 6a, 6b sowie ein Wärmeleitmittel 6c.

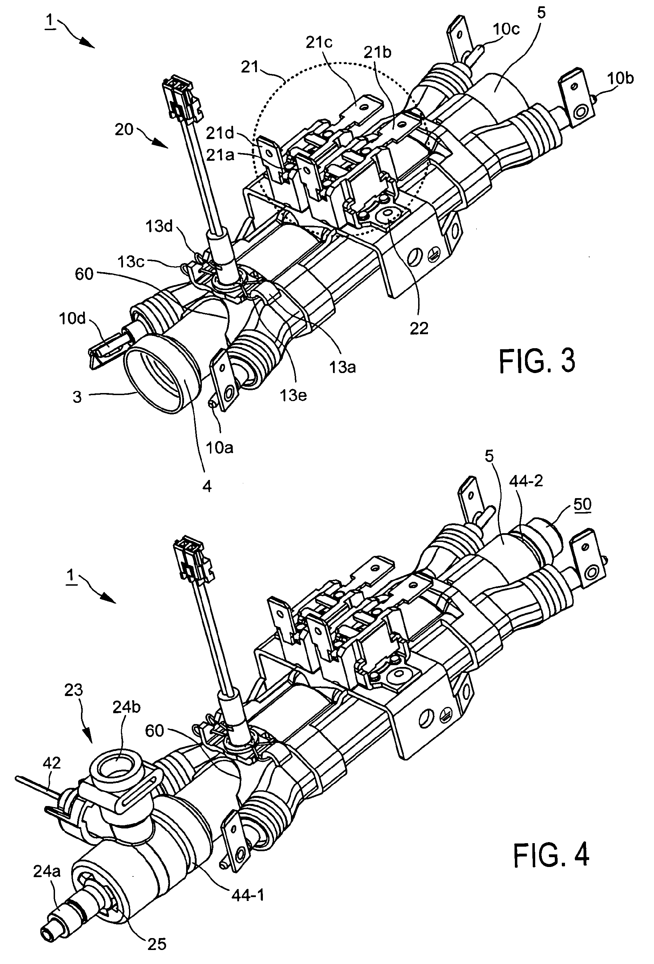

Das Metallrohr 2 weist eine Öffnung 3 in einem aufgeweiteten ersten Endbereich 4 mit gegenüber dem übrigen Metallrohr vergrößertem Querschnitt auf. Am dem aufgeweiteten Endbereich 4 gegenüberliegenden Endbereich 5 des Metallrohres 2 kann ein Verschlussstopfen bzw. eine Endkappe 50 (vgl. Fign. 4, 5, 9) vorgesehen werden, um dieses Ende hermetisch und druckfest verschließt.

Die in Fig. 1 dargestellte Heizeinrichtung 6 besteht aus den Rohrheizkörper 6a und 6b sowie aus dem als Wärmeleitblech 6c ausgebildeten Wärmeleitmittel. Während das Wärmeleitblech 6c das Metallrohr 2 vollständig in Umfangsrichtung umschließt, sind die Rohrheizkörper 6a und 6b an einander gegenüberliegenden Umfangsabschnitten des Metallrohres 2 in Umfangsrichtung gleichmäßig beabstandet und jeweils mit ihrer Längsrichtung parallel zur Längsrichtung des Metallrohres 2 angeordnet.

Die jeweiligen - vorzugsweise kalten, d.h. unbeheizt ausgeführten - Enden 7a, 7b, 7c, 7d der Rohrheizkörper 6a, 6b sind jeweils vom Metallrohr 2 mittels einer Kröpfung abgehoben bzw. weggebogen. Somit steht im Wesentlichen nur der beheizte Bereich der Rohrheizkörper 6a, 6b in Kontakt mit der Oberfläche des Wärmeleitblechs 6c. Zudem erleichtert die Kröpfung die Kontaktierung der Heizkörper 6a, 6b. Die Enden 7a, 7b, 7c, 7d der Rohrheizkörper 6a, 6b weisen jeweils eine mehrstufige Quetschung bzw. Crimpung 9a, 9b, 9c, 9d auf, mittels welcher sie jeweils eine die elektrischen Anschlussbolzen 10a, 10b, 10c, 10d haltende Verschlussperle fest und dichtend umschließen.

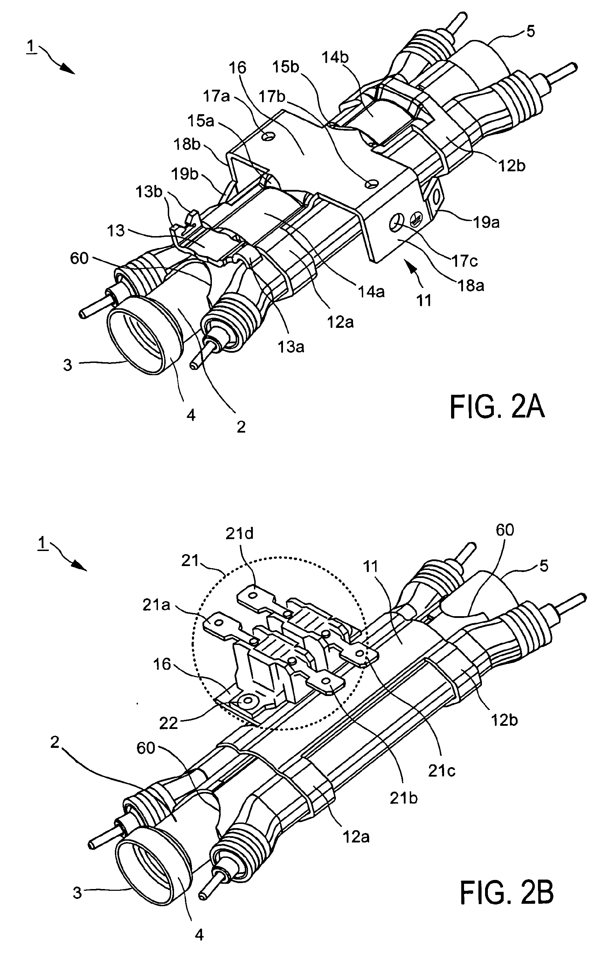

Fig. 2a zeigt die in Fig. 1 dargestellte Anordnung mit zusätzlich einer Montagehalterung 11. Die Montagehalterung 11 umschließt mit Klammern 12a, 12b sowohl den Rohrheizkörper 6a als auch den Rohrheizkörper 6b, das Wärmeleitblech 6c und fixieren dadurch die Anordnung des Metallrohres 2, der Heizeinrichtung 6 sowie der Montagehalterung 11 zueinander, d.h. hält diese zusammen. In Richtung der Öffnung 3 des Metallrohres 2 weist die Montagehalterung 11 einen Sensorabschnitt 13 für einen Temperatursensor, wie zum Beispiel einen NTC-Sensor, auf, der auf seiner im Bild rechts liegenden Seite einen Abwärtshaken 13a und auf der im Bild links liegenden Seite zwei Rasthaken 13b als Befestigungsmittel für einen Sensor aufweist. In Längsrichtung des Metallrohres 2 schließt sich an den Sensorabschnitt 13 ein erster Wärmleitabschnitt 14a an, an dem die Klammerabschnitte der Klammer 12a seitlich ausgebildet sind. Der erste Wärmeleitabschnitt 14a liegt im Wesentlichen vollflächig am Wärmeleitblech 6c an.

Um die in den Rohrheizkörpern 6a, 6b erzeugte Wärme auch von den keine Kontaktflächen mit dem Wärmeleitblech 6c aufweisenden Oberflächenbereichen der Rohrheizkörper 6a, 6b zum Metallrohr 2 leiten zu können und im Falle einer Überhitzung der Rohrheizkörper 6a, 6b eine gute Wärmeleitung zum Sensorabschnitt 13 zu gewährleisten, sind die Klammerabschnitte der Klammern 12a, 12b an etwa zur Hälfte der Längserstreckung des jeweiligen Wärmeleitabschnitts 14a, 14b angebracht, nämlich an derjenigen Sektion, welche der Öffnung 3 des Metallrohres 2 bzw. dem Verschlussstopfen 5 zugewandt ist.

Gegenüberliegend dem Sensorabschnitt 13 schließt sich an den ersten Wärmeleitabschnitt 14a ein erster Verbindungsabschnitt 15a an, der im Wesentlichen S-förmig vom ersten Wärmeleitabschnitt 14a absteht und in einen im Wesentlichen zum Metallrohr 2 gleichmäßig beabstandeten ebenen Montageabschnitt 16 für eine Sicherungseinrichtung (wie z.B. in Fig. 2B gezeigt) und ggf. eine Anschlusseinrichtung wie einen Steckverbinder übergeht. Der Montageabschnitt 16 weist Durchgangslöcher 17a, 17b, 17c, 17d beispielsweise für Schrauben oder Nieten auf.

An den Montageabschnitt 16 schließen sich quer zur Längsrichtung des Metallrohres 2 ein erstes Seitenteil 18a und ein zweites Seitenteil 18b an. Beide sind um jeweils ca. 90° gegenüber der Ebene des Abschnitts 16 für die Anschlusseinrichtung in Richtung der Rohrheizkörper 6a, 6b abgewinkelt und weisen jeweils ein Loch 17c bzw. 17d auf. Jeweils in ihrem unteren Bereich weisen das erste und das zweite Seitenteil 18a, b, eine Montagelasche 19a, 19b auf, die jeweils gegenüber der Ebene der Seitenteile 18a und 18b etwas in Richtung der jeweiligen Rohrheizkörper 6a, 6b gebogen sind. Auch die Montagelaschen 19a, 19b weisen jeweils ein Loch auf, über welches beispielsweise ein Erdungskontakt mit der Montagehalterung verbunden werden kann oder die gesamte Komponente an einer Montagehalterung in einem Haushaltsgerät, wie z. B. einer Kaffeemaschine, fixiert bzw. festgelegt werden kann. Selbiges gilt selbstverständlich auch für die Durchgangslöcher 17c und 17d in den Seitenteilen 18a, 18b.

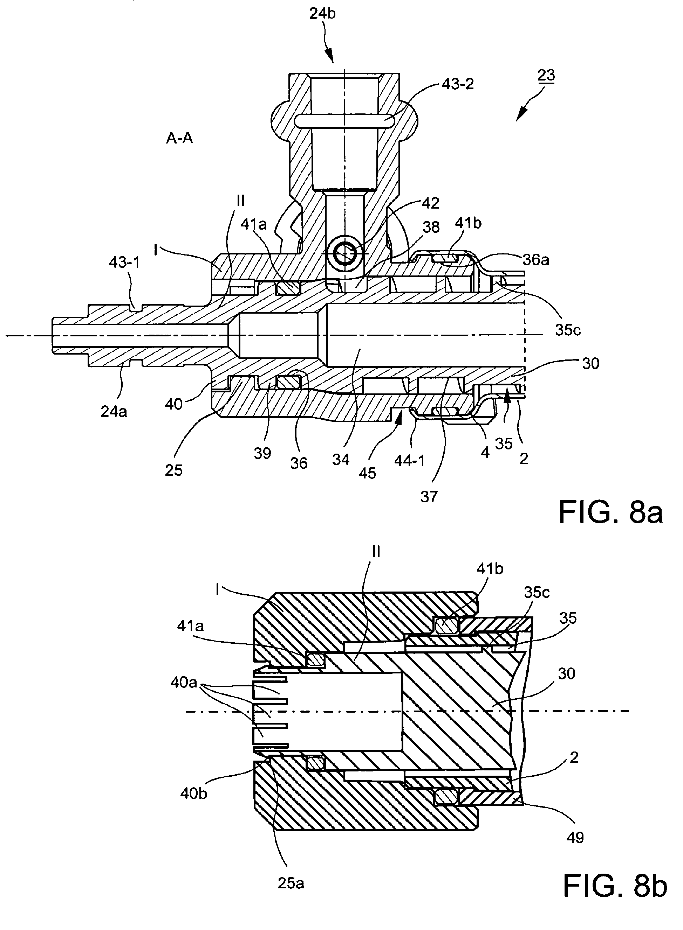

Im Zusammenhang mit Fig. 1 und 2a sei noch auf die Ausklinkung 60 im Wärmeleitblech 6c verwiesen. Der Zweck dieser Ausklinkung 60 besteht darin, für das Ende 3 des Metallrohrs 2 eine gezielte Beeinflussung der Wärmetransferpfade zwischen der Heizeinrichtung 6 und der das Metallrohr abschließenden Fluidanschlussbaugruppe zu erzielen. Die Ausklinkung 60 ist so dimensioniert, dass die Wärmeleitung vom Wärmeleitblech zum Ende 3 des Metallrohrs 2, das aus die Wärme schlecht leitendem Edelstahl besteht, so reduziert ist, dass im Fall eines Fehlers wie einem Trockenlaufen des Fluiderhitzers vorhandene Sicherungseinrichtungen ansprechen, bevor beispielswiese eine am Ende 3 angeordnete Fluidanschlussbaugruppe aus Kunststoff, wie beispielswiese in Fig. 8a veranschaulicht, durch Überhitzung beschädigt wird.

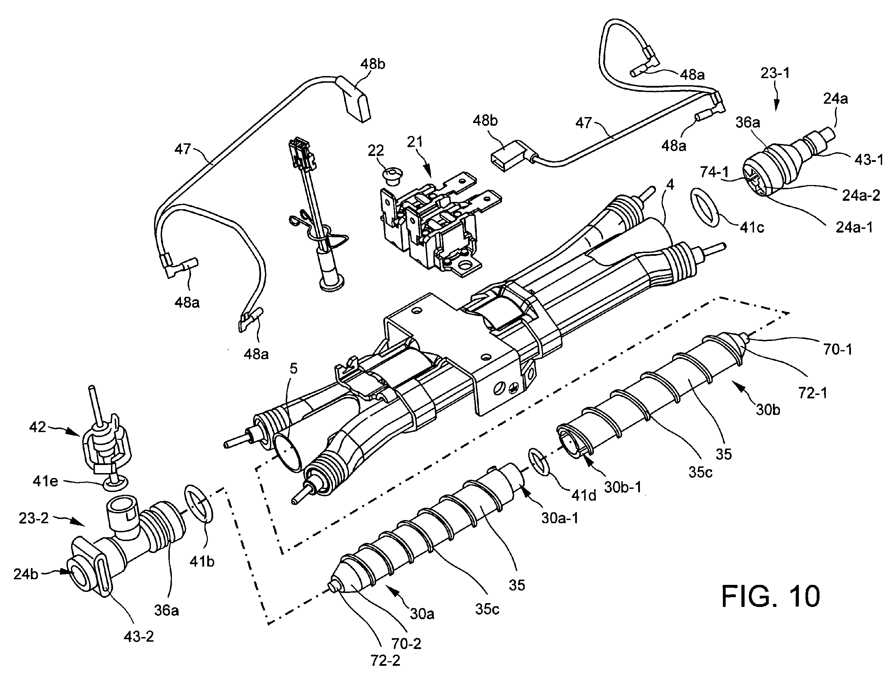

Fig. 2b zeigt eine abgewandelte Ausführungsform der in Fig. 2a dargestellten Anordnung. Die Montagehalterung 11 unterscheidet sich zur der in der Ausführung gemäß Fig. 2a dahingehend, dass der Montageabschnitt 16 asymmetrisch zur übrigen Montagehalterung angeordnet ist. Gegenüber der in Fig. 2a gezeigten Anordnung ist der Montageabschnitt 16 der Fig. 2b als eine seitlich gegenüber der Mittellängsachse der Montagehalterung 11 versetzt auskragender Bereich ausgeführt, der auch als "Fahne" oder "Blechfahne" bezeichnet werden könnte. Die auf ihr befestigte Sicherungseinrichtung 21, in Form einer Doppelsicherung, wird in Verbindung mit Fig. 3 und Fig. 10 eingehend diskutiert.

Die Funktion des gezeigten Montageabschnitts 11 ist vergleichbar mit der in Verbindung mit Fig. 2a beschriebenen. Beispielsweise ist eine Anordnung von einer Anschlusseinrichtung und/oder Sicherheitseinrichtungen auf dem Montageabschnitt 16 möglich und vorgesehen. Nicht dargestellt aber dennoch möglich ist ebenso eine wie in Verbindung mit Fig. 2a beschriebene Anordnung von weiteren Seitenteilen und/oder Montagelaschen.

Ein weiterer Unterschied zwischen den in Fig. 1 und Fig. 2a gezeigten Vorrichtungen besteht in der Ausgestaltung des Wärmeleitblechs der Fig. 2b. In der Ausführung der Fig. 2b ist an beiden Enden 3, 5 des Metallrohrs 2 jeweils eine Ausklinkung 60 auf der Oberseite, also der dem Betrachter zugewandten Seite des Fluiderhitzers erkennbar. Der Zweck dieser zwei Ausklinkung 60 besteht wie bei der Ausführung in Fig. 2a darin, an beiden Enden 3, 5 des Metallrohres 2 eine gezielte Beeinflussung der Wärmetransferpfade zwischen der Heizeinrichtung 6 und den Temperatursensoren und/oder Sicherungseinrichtungen bzw. zwischen der Heizeinrichtung 6 und den das Metallrohr abschließenden Bauteilen zu erzielen. Fig. 3 zeigt die in Fig. 2a dargestellte Anordnung ergänzt um einen Temperatursensor 20, der in wärmeleitendem Kontakt auf dem Sensorabschnitt 13 angeordnet ist und im Wesentlichen senkrecht von diesem absteht. Der Temperatursensor 20 wird durch ein Befestigungsmittel in Form eines Federdrahtelements, welches zwei Rastfedern 13c, 13d sowie eine Schlaufe 13e aufweist, gegen den Sensorabschnitt 13 gedrückt. Hierzu untergreift die Schlaufe 13e den Abwärtshaken 13a der Montagehalterung 11 und verspannt den Temperatursensor 20 in Zusammenwirken mit den auf der gegenüberliegenden Seite ausgebildeten Rastfedern 13c, d, die unter jeweils einem Rasthaken 13b greifen.

Des Weiteren ist gegenüber der in Fig. 2a gezeigten Anordnung eine elektrische Sicherungseinrichtung 21 auf dem Montageabschnitt 16 der Montagehalterung 11 mittels jeweiligen Nieten 22 fest gelegt. Die elektrische Sicherungseinrichtung 21 weist Anschlussfahnen 21a, 21 b, 21c, 21d auf, über die einerseits elektrische Energie von der Peripherie bezogen und andererseits an die elektrischen Anschlussbolzen 10a, 10b, 10c, 10d der Rohrheizkörper weitergeleitet werden kann.

Die Sicherungseinrichtung 21 enthält bevorzugt für jede der Anschlussleitungen ein Sicherungselement, das bei Überschreiten einer vorbestimmten Temperatur einen Stromfluss dauerhaft unterbricht. Da zwei Anschlussleitungen vorgesehen sind, gibt es zwei Sicherungselemente - daher die Bezeichnung Doppelsicherung.

Zudem zeigt Fig. 3 an den elektrischen Anschlussbolzen 10a, 10b, 10c, 10d der Rohrheizkörper 6a, 6b beispielsweise durch Punktschweißen fixierte Anschlussfahnen, auf die sich zur elektrischen Kontaktierung Kabelschuhe aufschieben lassen. Diese Anschlussfahnen können entsprechend den Anschlussfahnen 21a, 21b, 21c, 21d der elektrischen Sicherungseinrichtung 21 beispielsweise als Steckkontakte zur Verbindung mit den Anschlussfahnen 21a, 21b, 21c, 21d der elektrischen Sicherungseinrichtung 21 mittels jeweiliger Verbindungskabel dienen.

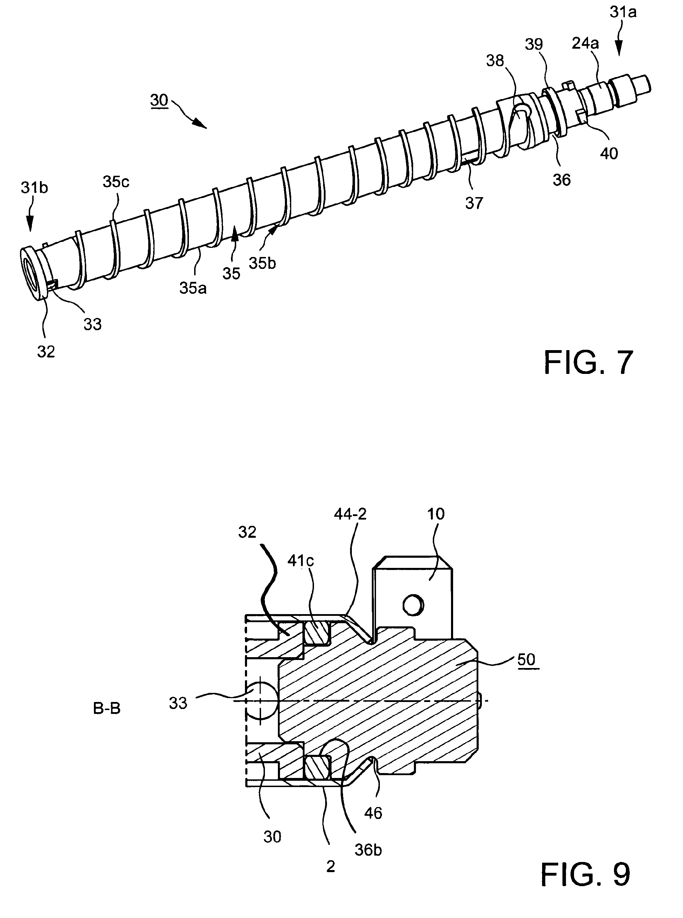

Fig. 4 zeigt die in Fig. 3 dargestellte Anordnung zusätzlich mit einer Fluidanschlussbaugruppe 23. Die Fluidanschlussbaugruppe 23 weist einen ersten Fluidanschluss 24a und einen zweiten Fluidanschluss 24b auf, deren jeweilige Grundkörper durch eine Verbindung nach Art eines Bajonettverschluss verbunden sind. Mittels eines am Grundkörper des ersten Fluidanschuss 24a befindlichen Bajonettverschlussstücks und eines am Grundkörper des zweiten Fluidanschluss 24b ausgebildeten Bajonettverschlussgegenstücks 40 (siehe Fign. 7 und 8a) sind der erste Fluidanschluss 24a und der Fluidführungskern 34 in der Fluidanschlussbaugruppe 23 verriegelt.

Während der erste Fluidanschluss 24a im Wesentlichen in der Längsachse des Metallrohres 2 liegt, ist der zweite Fluidanschluss 24b im Wesentlichen senkrecht zum ersten Fluidanschluss 24a an die im Wesentlichen zylindrische Mantelfläche eines hülsen- bzw. buchsenförmigen Elements der Fluidanschlussbaugruppe 23 angesetzt.

Wiederum senkrecht ist an den zweiten Fluidanschluss 24b eine Halterung für einen ersten Temperatursensor 42 zur Erfassung der Fluidabflusstemperatur angesetzt.

Es sei noch erwähnt, dass die Fluidanschlüsse 24a, 24b zur Befestigung von Anschlüssen etwaiger Fluidführungsmittel bekannte Verriegelungseinrichtungen aufweisen, die derart dimensioniert sind, dem Druck innerhalb des Fluiderhitzers gegenüber bestehen zu können. Auf einzelne Funktionen und Merkmale der gezeigten Details wird im Rahmen der nachfolgenden Schnittdarstellungen der Fign. 8a und 9 noch weiter eingegangen.

In Fig. 4 zeigt weiter einen Verschlussstopfen 5a im zweiten Endbereich 5 des Metallrohres 2. Der Verschlusstopfen 5a kann aus Gründen der Temperaturfestigkeit aus Metall, insbesondere Edelstahl, bzw. einem temperaturbeständigen Kunststoff, insbesondere einem PPA (Polyphtalamid), einem PPS (Polyphenyl Sulfid), bzw. einem PEI (Polyetherimid) gefertigt und durch eine Falzung 5b der Stoßkante des Metallrohres 2 mit diesem formschlüssig verbunden sein.

Unter einer "Falzung" sei hier eine durch plastische Verformung erreichte Querschnittsverjüngung des den Verschlussstopfen 5 umlaufenden Endes des Metallrohres 2 verstanden. Die Falzung bildet eine Hinterschneidung einer auf dem Verschlussstopfen 5a umlaufenden Struktur und damit eine formschlüssige nicht ohne Zerstörung der Anordnung lösbare Verbindung. Wie eingangs erwähnt muss die Falzung nicht vollständig umlaufend ausgeführt sein. Vielmehr reicht es aus, wenn die Endkante bzw. Abschlusskante des Metallrohrs 2 nur in Teilbereichen gefalzt ist.

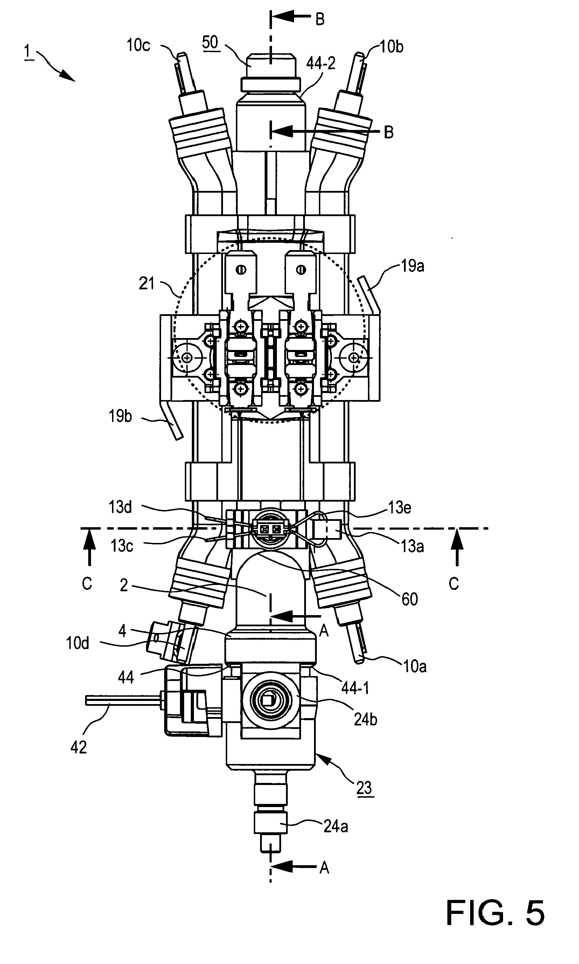

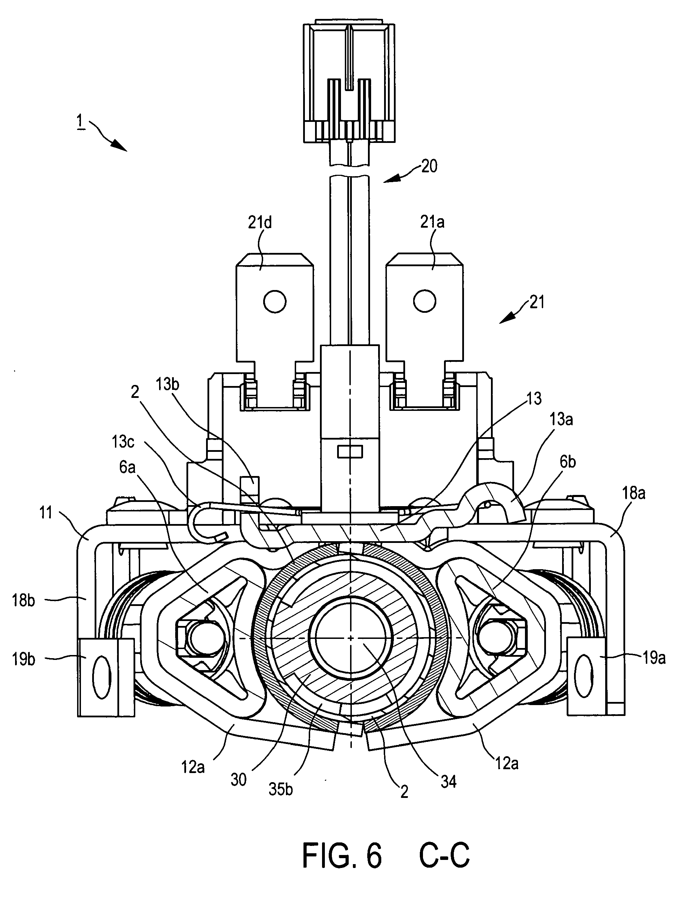

Fig. 5 zeigt eine Draufsicht der in Fig. 4 dargestellten und dort beschriebenen Anordnung und definiert die Lage der Schnittebenen A-A, B-B und C-C für die in den Fign. 6, 8a und 9 gezeigten Schnittdarstellungen.

Fig. 6 zeigt einen Schnitt durch die Schnittebene C-C der Fig. 5, also eine Ebene senkrecht zur Längsachse des Metallrohres 2 auf Höhe des Sicherheitstemperatursensors 20. Diese Darstellung veranschaulicht insbesondere die kompakte Lage der Heizeinrichtung 6 und der durch das Metallrohr 2 realisierten Fluidführung.

Das zentrale Element der Darstellung ist ein im Inneren eines Fluidführungskerns 30 angeordneter Hohlraum, der einen zweiten Fluidkanalabschnitt 34 zur Fluidführung bildet. Ein Fluidführungskern 34, der im Zusammenhang mit Fig. 7 näher erläutert wird, umläuft ein wendelförmig geführter, erster Fluidkanalabschnitt 35 (vgl. hierzu Fig. 7), wobei das Material zwischen zwei benachbarten Seitenwänden 35b auf der linken Seite, genauer gesagt zwischen der Acht- und der Zehn-Uhr-Position, geschnitten ist.

Der Fluidführungskern 30 ist ohne Spiel in das Metallrohr 2 eingepasst, welches wiederum vom Wärmeleitblech 6c umschlossen ist. Während das Metallrohr 2 aus einem Edelstahl gefertigt ist, besitzt das Wärmeleitblech 6c eine höhere Wärmeleitfähigkeit, in dem es aus Aluminium, Kupfer oder einem anderen, geeigneten Metall bzw. einer geeigneten Metalllegierung besteht.

Zum Zwecke einer besseren Verlötung der Wärmeleitblech 6c mit dem Metallrohr 2 und den Rohrheizkörpern 6a, 6b kann das Wärmeleitblech 6c in geeigneten Abständen Durchbrechungen bzw. Durchgangslöcher oder Schlitze aufweisen, welche das Hindurchtreten von Lötmittel bzw. Flussmittel während des Lötvorgangs ermöglichen und so zu einer gleichmäßigen Verteilung des Lötmittels bzw. Flussmittel zwischen den Bauteilen führen.

Im Bild links und rechts dargestellt schließen sich die zwischen der Zwei-Uhr und der Vier-Uhr-Position bzw. zwischen der Acht-Uhr und der Zehn-Uhr-Position befindlichen Kontaktfläche der Rohrheizkörper 6a bzw. 6b an. Gut erkennbar korrespondieren konkaven Kontaktflächen der Rohrheizkörper 6a, 6b mit einer konvexen bzw. zylindrischen Oberfläche der Wärmeleitmittel 6c. Hierdurch ist ein möglichst guter direkter Wärmeübergang zwischen der Oberfläche der Rohrheizkörper 6a, 6b und dem Wärmeleitblech 6c gewährleistet.

Die zuvor beschriebene Anordnung ist von der Klammer 12a und (der nicht in dieser Figur dargestellten) Klammer 12b der Montagehalterung 11 umschlossen, die so für eine zusätzliche Vermittlung der Wärme zwischen der Oberfläche der Rohrheizkörper 6a, 6b und der Oberfläche des Wärmeleitblechs 6c sorgen. In Verbindung mit der exakt auf die abschnittsweise Kontur des Wärmeleitblechs 6c angepasste Kontur des ersten Wärmeleitabschnitts 14a wird so eine verbesserte Vermittlung der in den Rohrheizkörpern 6a, 6b erzeugten Wärme ins Wärmeleitblech 6c und weiter zum Metallrohr 2 hergestellt.

Zudem ist in Fig. 6 die direkte Anlage des Sensorabschnitts 13 an der Oberseite des Wärmeleitblechs 6c dargestellt. Auch veranschaulicht die Schnittdarstellung das Zusammenspiel zwischen dem Abwärtshaken 13a, der von der Schlaufe 13e untergriffen wird bzw. den Rasthaken 13b, die von den Rastfedern 13c, d untergriffen werden im Zusammenhang mit den dazwischen liegenden Abschnitt, der einen Sockel des Sicherheitstemperatursensors 20 fest auf den Sensorabschnitt 13 der Montagehalterung 11 drückt. Hierbei kann das die Rastfedern 13c, 13d sowie die Schlaufe 13e aufweisende Halteelement z. B. aus Draht und/oder einem Federstahl gefertigt sein, um eine geeignete Vorspannung für die Befestigung des Sicherheitstemperatursensors 20 auf der Montagehalterung 11 zu gewährleisten.

Fig. 7 zeigt den in Fig. 4 in das Metallrohr 2 eingeführten Fluidführungskern 30, der im Bereich eines ersten Endes 31 a den ersten Fluidanschluss 24a aufweist. Der erste Fluidanschluss 24a ist bereits in Fig. 4 gezeigt. Ebenfalls am ersten Ende 31a ist das Bajonettverschlussgegenstück 40 zu erkennen, welches mit dem in Fig. 4 diskutierten Bajonettverschlussstück 25 zusammenwirkt. An das Bajonettverschlussgegenstück 40 und den für das Verriegeln mit dem Bajonettverschlussstück 25 vorgesehenen freien Bereich schließt sich ein zweiter Steg 39 an, hinter dem eine erste Dichtungsnut 36 zum Einlegen bzw. Einspritzen von Dichtmittein vorgesehen ist.

Am zweiten Ende 31 b des Fluidführungskerns 30 ist ein erster Steg 32 angeordnet, auf den in Zusammenhang mit Fig. 9 noch genauer eingegangen wird. In unmittelbarer Nähe zum ersten Steg 32 ist eine Durchführung bzw. Durchbrechung 33 vorgesehen, die den im Inneren des Fluidführungskerns 30 angeordneten zweiten Fluidkanalabschnitt 34 mit dem auf seiner Außenseite angeordneten ersten Fluidkanalabschnitt 35 hydraulisch verbindet. Mit anderen Worten kann kaltes, im Inneren des Fluidführungskerns 30 zugeströmendes Fluid durch die Durchbrechung 33 an die Oberfläche des Fluidführungskerns 30 treten und gerät dabei in Kontakt mit der beheizten Innenseite des Metallrohres 2. Der auf der Außenseite des Fluidführungskerns 30 gebildete erste Fluidkanalabschnitt wird durch den Boden 35a sowie die Seitenwand 35b begrenzt. Der erste Fluidkanalabschnitt 35 bzw. die Seitenwand 35b winden sich somit helixförmig bzw. schraubenlinienförmig auf der Oberseite des Fluidführungskerns 30 in Richtung dessen ersten Endes 31 a.

Im beheizten Bereich bleibt die Tiefe des ersten Fluidkanalabschnitts 35 bzw. die Höhe seiner Seitenwand 35b dabei im Wesentlichen konstant. Die Steigung des die Seitenwand 35b bildenden Steges zum Fluidablauf hin nimmt jedoch ab, sodass die Bereite des ersten Fluidkanalabschnitts 35 in Richtung des ersten Endes 31 a abnimmt.

Eine Tiefenänderung 37 im Fluidkanal ist etwa zu Beginn des vorletzten Linienzuges der Schraubenlinie des ersten Fluidkanalabschnitts 35 ausgebildet und dient einer Vertiefung und damit partiellen Querschnittsvergrößerung im ersten Fluidkanalabschnitt 35. Ziel dieser Maßnahme ist ein möglichst großer Radius für die Umlenkung der Fluidströmung und eine Querschnittsanpassung an die Durchbrechung bzw. Durchführung 33, zur Vermeidung eines sogenannten Totvolumens, also eines nur schlecht durchströmten Fluidkanalbereichs.

Aufgrund des vergrößerten Fluidkanalquerschnitts nimmt die Strömungsgeschwindigkeit des darin strömenden Fluids ab. Dies führt einerseits dazu, dass in diesem Bereich wenig dynamischer Druck abfällt, andererseits dazu, dass weniger Strömungslärm entsteht und weniger Kavitation auftritt.

Die Seitenwand des Fluidkanalendes 38 ist abschnittsweise zylindrisch ausgebildet, um mit dem lichten Querschnitt des zweiten Fluidanschlusses 24b (vgl. Fign. 4 und 8a) korrespondiert. Indem die relative Lage bzw. Positionierung zwischen der Anschlussbaugruppe 23 und dem Fluidführungskern 30 mittels der Verbindungseinrichtung, hier bestehend aus dem Bajonettverschlussstück 25 und dem Bajonettverschlussgegenstück 40, gezielt zueinander festgelegt ist, wird eine strömungsmechanisch günstige Fluidführung aus dem ersten Fluidkanalabschnitt 35 in den zweiten Fluidanschluss 24b sichergestellt.

Der Fluidführungskern 30 ist bevorzugt aus Metall, insbesondere Edelstahl, bzw. einem temperaturbeständigen Kunststoff, insbesondere einem PPA (Polyphtalamid), einem PPS (Polyphenyl Sulfid), bzw. einem PEI (Polyetherimid) gefertigt.

Fig. 8a zeigt einen Schnitt entlang der in Fig. 5 mit A-A bezeichneten Ebene durch die Fluidanschlussbaugruppe 23 entlang der Längsrichtung des Metallrohres 2. Bei der Fluidanschlussbaugruppe 23 handelt es sich um eine Kombifluidanschlussbaugruppe aus einem ersten Teil I und einem zweiten Teil II, die sowohl den ersten Fluidanschluss 24a mit dem Fluidzulauf wie den zweiten Fluidanschluss 24b mit dem Fluidablauf des Fluiderhitzers aufweist. D.h., Ablauf als auch Zulauf sind vorteilhaft an einer einzigen Stirnseite des Fluiderhitzers ausgeführt.

Links in der Fig. 8a befindet sich am zweiten Teil II der Fluidanschlussbaugruppe 23 der erste Fluidanschluss 24a, der zur Befestigung eines Fluidführungsmittels in etwa mittig eine umlaufende Verriegelungsnut 43-1 aufweist. Ein geeignetes Gegenstück für die Befestigung peripherer Fluidführungsmittel auf dem ersten Fluidanschluss 24a könnte z. B. wie der zweite Fluidanschluss 24b am ersten Teil I ausgebildet sein. Der im Wesentlichen rohrförmig ausgestaltete zweite Fluidanschluss 24b ist wie in Fig. 4 gezeigt mit einem Einschub bzw. einer Durchsteckmöglichkeit versehen, welche eine Riegelführungsnut 43-2 aufweist. Indem die in dem ersten Fluidanschluss 24a und die im zweiten Fluidanschluss 24b vorgesehen Nuten 43-1, 43-2 passend zueinander ausgelegt sind, kann bei beim Verbinden derartig komplementär ausgestalteter Fluidanschlüsse miteinander durch Einschieben bzw. Durchstecken eines entsprechend ausgestalteten Sicherungselementes wie z. B. einem Riegel (nicht gezeigt) in Form einer Drahtfeder senkrecht zur Strömungsrichtung ein Lösen der zusammengesteckten Anschlüsse voneinander verhindert werden, wobei eine derartige Verbindung hohen Drücken standhält. Es sei noch angemerkt, dass die komplementäre Ausführung der Fluidanschlüsse 24a und 24b vorteilhaft eine Verwechslung der Anschlüsse beim Einbau in beispielsweise eine Kaffeemaschine verhindert.

Bei der Fluidanschlussbaugruppe 23 in der Fig. 8a ist der zweite Teil II integral am Fluidführungskern 30 ausgebildet, d.h. der zweite Teil II wurde einstückig mit dem Fluidführungskern 30 beispielsweise mittels Spritzguss hergestellt. Der erste Fluidanschluss 24a führt zu erhitzendes Fluid von rechts durch den zweiten Teil II der Fluidanschlussbaugruppe 23 in den zweiten Fluidkanalabschnitt 34. Der erste Teil I der Fluidanschlussbaugruppe 23 ist mittels eines am zweiten Fluidanschluss 24b ausgebildeten Bajonettverschlussstücks 25 in Zusammenspiel mit dem am zweiten Teil II ausgebildeten Bajonettverschlussgegenstück 40 verriegelt. Selbstverständlich kann die Verbindung auch mit einem anderen Verbindungsprinzip erfolgen, wie zum Beispiel einer Verschraubung oder einer Schnapp-Rast-Verbindung. In der Ausführung der Fig. 8a ist auch eine reine Steckverbindung denkbar, da der erste Teil I und der zweite Teil II der Fluidanschlussbaugruppe 23 durch die Falzung 44-1 des Metallrohres 2 in einer bestimmten Positionierung zu einander dauerhaft fixiert werden können.

Die Schnittdarstellung zeigt weiterhin einen umlaufenden zweiten Steg 39 und eine damit am zweiten Teil gebildete erste Dichtungsnut 36, in der zur Abdichtung der zwei Teile I, II gegeneinander ein umlaufendes Dichtmittel in Form einer O-Ring-förmigen Gummidichtung 41 a vorgesehen ist.

Am ersten Teil I im zweiten Fluidanschluss 24b ist der in Fig. 4 von außen dargestellte Temperatursensor 42 in einer senkrecht zu seiner Achse geschnittenen Ansicht dargestellt. Eine Sensorspitze ragt dabei in den freien Querschnitt des zweiten Fluidanschlusses 24b hinein und ermöglicht dort eine genaue Erfassung der Fluidtemperatur im Bereich des Fluidauslasses.

Im in Fig. 8a rechts dargestellten Teil des Fluidführungskerns 30 ist die im Zusammenhang mit Fig. 7 angesprochene Tiefenänderung 37 im ersten Fluidkanalabschnitt 35 erkennbar. Der letzte Gang der Wendel des ersten Fluidkanalabschnitts 35 endet als Fluidkanalende 38, das zur Längsachse des zweiten Fluidanschlusses 24b positioniert, sodass mit dem zweiten Fluidanschluss erhitzest Fluid in radialer Richtung abgeführt werden kann.

Weiterhin zeigt Fig. 8a den ersten Endbereich 4 mit der Querschnittsvergrößerung des Metallrohres 2, um teilweise die Fluidanschlussbaugruppe 23 innerhalb des Metallrohrs 2 aufzunehmen. Der erste Endbereich 4 des Metallrohres 2 ist plastisch zumindest in Abschnitten der umlaufenden Abschlusskante des Metallrohrs 2 zu einem Falz verformt (gefalzt). Dabei überfasst das Metallrohr 2 eine in einer zweiten Dichtungsnut 36a liegende Dichtung 41 b, die den ersten Teil gegenüber der Innenseite des Metallrohres 2 abdichtet. Die Falzung 44-1 bildet durch Eingreifen in eine dritte Nut 45 auf der Außenseite der Fluidanschlussbaugruppe 23a eine formschlüssige Verriegelung in Form einer Hinterschneidung. Die Dichtung 41 b wird vom Metallrohr 2 dadurch in die Nut 36a gepresst und somit die Fluidanschlussbaugruppe 23 gegenüber dem Metallrohr 2 fluiddicht und druckfest abgedichtet.

Für ein Lösen der beschriebenen Verbindung zwischen Bajonettverschlussstück 25 und Bajonettverschlussgegenstück 40 müsste der zweite Fluidanschluss 24b gegenüber dem ersten Fluidanschluss 24a und dem Fluidführungskern 30 verdreht und im Bild nach links abgezogen werden. Ein solches Verdrehen und damit Abziehen wird durch die erfindungsgemäße Falzung 44-1, die einen Teil des ersten Fluidanschlusses 24a hinterschneidet bzw. in die dritte Nut 45 eingreift, verhindert. Somit wird ein unbefugtes bzw. zerstörungsfreies Lösen vom Metallrohr 2 ausgeschlossen. Auch ist die korrekte Anordnung der Teile I und II der Fluidanschlussbaugruppe 23 dauerhaft sichergestellt.

Es sei noch angemerkt, dass das Fluidkanalende 38 auch als eine am zweiten Teil II umlaufende Nut ausgeführt werden könnte, sodass, wenn für eine Verbindung zwischen dem ersten Teil I und dem zweiten Teil II eine Steckverbindung beispielsweise eine Schnapp-Rast-Verbindung (wie z.B. in Fig. 8b) verwendet wird, der zweite Fluidanschluss 24b hinsichtlich seiner Ausrichtung frei am Fluiderhitzer verdrehbar ist. Damit kann vorteilhaft der Fluidablauf je nach Bedarf in der Einbaulauge in beispielsweise einer Kaffeemaschine passen positioniert werden.

Es sei darauf hingewiesen, dass die in Fig. 8a dargestellte Verbindung zwischen dem Metallrohr 2 und des zweiten Fluidanschlusses 24b selbstverständlich bei entsprechender Dimensionierung ohne eine Querschnittsvergrößerung 4 des Metallrohrs 2 bewerkstelligt werden kann (siehe hierzu auch Falzung 44-2 in Fig. 9). Hierzu müsste lediglich die zweistufige Querschnittsvergrößerung des freien Querschnitts des ersten Fluidanschlusses 24a in einen Bereich im Bild weiter rechts, d.h. in den zweiten Fluidkanalabschnitt 34 verlagert werden. Mit anderen Worten könnte die Querschnittsvergrößerung des zweiten Fluidkanalabschnitts 34 erst im Bereich des Fluidführungskerns 30 vorgesehen werden, in welchem die Tiefenänderung 37 des ersten Fluidkanalabschnitts ausgebildet ist bzw. der hauptsächlich durch die Heizeinrichtung 6 umfasste Bereich angeordnet ist.

Fig. 8b veranschaulicht eine alternative Ausführung einer Fluidanschlussbaugruppe 23-1 mit einem ersten Fluidanschluss 24a, bei dem die Fluidzufuhr in den ersten Fluidkanalabschnitt 35 auf dem Fluidführungskern 30 im Wesentlichen wie bei der Fig. 8a beim zweiten Fluidkanalanschluss 24b in radialer Richtung erfolgt. Es sei angemerkt, dass der eigentliche Fluidanschluss in Fig. 8b nicht gezeigt ist, da dieser im Schnitt der Fig. 8b auf der vom Betrachter abgewandten Seite liegt.

Der zweite Teil II der Fluidanschlussbaugruppe 23-1 ist wieder als integraler Bestandteil des Fluidführungskerns 30 ausgeführt. Die Verbindung zwischen dem ersten Teil I und dem zweiten Teil II ist als Schnapp-Rast-Verbindung ausgeführt. Hierzu befindet sich am ersten Teil I am Rand eines zentralen Durchgangsloches eine umlaufende Rastnut 25a. Am durch das Durchgangsloch hindurchgeführten zweiten Teil ist ein im Wesentlichen ringförmiger Kranz mit Rastzungen 40a vorgesehen, die jeweils nach außen gerichtete Rasthaken 40b aufweisen. Die Rasthaken 40b greifen nach aufstecken des ersten Teils I auf den zweiten Teil II in die Rastnut 25a, d.h. hinterschneiden diese und legen si den ersten Teil I am zweiten Teil II fest.

Zur Abdichtung der Fluidanschlussbaugruppe 23-1 sei angemerkt. Der erste Teil I wird gegenüber dem zweiten Teil II mittels eines Dichtungsmittels, in Fig. 8b einer O-Ring-Dichtung 41a fluiddicht und druckfest abgedichtet. Der erste Teil wird gegenüber der Außenoberfläche des Metallrohres mittels eines Dichtmittels, in Fig. 8b einer O-Ring-Dichtung 41 b ebenfalls fluiddicht und druckfest abgedichtet. Hierzu ist eine Stützhülse 49 auf das Metallrohr 2 aufgeschoben, die sich rechts in Fig. 8b am ebenfalls auf dem Metallrohr 2 befindlichen Wärmeleitblech 6c (in Fig. 8b nicht gezeigt, vgl. beispielsweise Fig. 1) abstützt. Eine umlaufende Ausnehmung 36b im ersten Teil I übergreift die Stützhülse 49 und bildet mit dieser eine umlaufende Nut, in der die O-Ring-Dichtung 41 b angeordnet ist. Durch die Stützhülse wird das in Fig. 8b gezeigte Ende des Metallrohres 2 wärmeleitungsmäßig von der Heizeinrichtung des Fluiderhitzers entkoppelt. Da das Metallrohr 2 bevorzugt aus einem Edelstahl besteht, welches schlecht die Wärme leitet, werden sowohl die Anschlussbaugruppe als auch die Dichtung 41 b thermisch weniger belastet.

Es sei noch angemerkt, dass eine Fluidanschlussbaugruppe 23-2 mit einem zweiten Fluidanschluss 24b als Fluidabführ für das erhitzte Fluid im Wesentlichen identisch zur Fluidanschlussbaugruppe 23-1 der Fig. 8b ausgeführt werden kann. Damit kann ein Fluiderhitzer mit jeweils radialem Fluidzulauf bzw. Fluidablauf zur Verfügung gestellt werden, bei dem sich bei drehbarer Ausführung der jeweiligen ersten Teile I der Fluidanschlussbaugruppen die Orientierung der Anschlüsse frei einstellen lässt.

Fig. 9 zeigt den Verschlussstopfen 50 der Fig. 4 an einem Ende des Metallrohrs 2, der bei Ausführungen des Fluiderhitzers mit einer Kombianschlussbaugruppe gemäß der Fig. 8a am anderen Ende des Fluiderhitzers benötigt wird. Der Verschlussstopfen 50 auf seiner im Bild linken Seite teilweise in die am zweiten Ende 31 b eines Fluidführungskerns 30 gelegene Öffnung eingeschoben ist. Zwischen dem ersten Steg 32 des Fluidführungskerns 30 und einer am Verschlussstopfen 50 gleichmäßig umlaufenden Phase bzw. Schulter ist ein Dichtmittel in Form einer O-Ring-Dichtung 41c angeordnet. Diese O-Ring-Dichtung 41 c kann - ebenso wie die zuvor genannten Dichtmittel 41a und 41b - aus einer umlaufenden Dichtung bestehen, die aus EPDM Ethylen-Propylen-Kautschuk), NBR (Nitril-Butadien), LSR (Silikon), FFKM (perfluorierte Elastomere), FKM (Fluorkarbon) oder einem Hochleistungs-Fluorelastomer bzw. TPE (einem thermoplastischen Elastomer) bestehen.

Auch am Verschlussstopfen 50 ist eine zweite Falzung 44-2 (wie oben beschriebene die Falzung 44-1) der Stoßkante bzw. Abschlusskante des Metallrohres 2 vorgesehen, die in eine umlaufende vierte Nut 46 am Verschlussstopfen 5 eingreift. Die zweite Falzung 44-2 verhindert, wie die in Verbindung mit Fig. 8a diskutierte Falzung 44-1, ein Ablösen des Verschlussstopfens 50 vom Metallrohr 2. Wie eingangs beschrieben besteht die Verschlusskappe bzw. der Verschlussstopfen 50 bevorzugt aus einem Kunststoff. In diesem Zusammenhang sei auf eine erfindungsgemäße Besonderheit des Wärmeleitmittels, d.h. des Wärmeleitbleches 6c in der in Fig. 2B dargestellten Ausführung verwiesen. Dort ist im Wärmeleitmittel eine vorbestimmte Auspaarung bzw. Ausklinkung im Wärmeleitblech 6c vorgesehen, sodass die Wärmeleitung von der Heizeinrichtung, d.h. den Rohrheizkörpern 6a und 6b im Wesentlichen zum Verschlussstopfen 50 hin durch das Material des Metallrohres 2 bestimmt ist. Da das Metallrohr 2 bevorzugt aus einem Edelstahl besteht, der ein schlechter Wärmeleiter ist, kann eine Überhitzung, insbesondere ein Aufweichen, des Verschlussstopfens 50 aus einem Kunststoff im Fehlerfall, z.B. bei einem Trockenlaufen des Fluiderhitzers, vor Ansprechen der durch die Doppelsicherung 21 (vgl. Fig. 2B) gebildeten Sicherungseinrichtung bzw. einer entsprechenden Reaktion aufgrund der mittels des Temperatursensors 42 (vgl. Fig. 3 und 4) erfassten Temperatur vorteilhaft verhindert werden.

Es sei angemerkt, dass der Verschlusstopfen auch aus einem Metall, insbesondere Edelstahl, hergestellt werden kann, um das mit ihm verschlossene Ende des Metallrohrs 2 möglichst uneingeschränkt beheizen zu können. In diesem Fall (vgl. Fign. 2A, 3, 4, und 5) kann die erfindungsgemäße Ausgestaltung des Wärmeleitmittels an diesem Ende des Metallrohres entfallen. Es sei angemerkt, dass die Ausführung gemäß Fig. 2B ohne weiteres auf die Ausführungen gemäß Fign. 2A, 3, 4, und 5 übertragen werden kann, für den Fall eines Verschlussstopfens 50 aus einem Kunststoff bzw. im Falle eines Fluiderhitzers mit jeweiliger Fluidzufuhr bzw. Fluidabfuhr aus Kunststoff an jeweils einem Ende des Metallrohres 2.

An dieser Stelle sei angemerkt, dass der in Fig. 9 dargestellte Verschlusstopfen 50 auch integral mit dem Fluidführungskern 30 ausgeführt sein kann. Der Fluidführungskern 30 wäre dann entsprechend mit dem integralem Verschlusstopfen 50 ins Metallrohr 2 einzusetzen und am anderen Ende mit dem ersten Teil I (vgl. Fig. 8a) der Fluidanschlussbaugruppe zu verriegeln.

Fig. 10 zeigt eine Explosionsdarstellung eines Ausführungsbeispiels eines erfindungsgemäßen Fluiderhitzers. Die meisten Merkmale bzw. Aspekte des Fluiderhitzers sind in Verbindung mit den Fign. 1 bis 9 bereits ausführlich erläutert worden, weshalb im Folgenden nur auf einzelne Merkmale bzw. Unterschiede der in Figur 10 gezeigten Ausführung eingegangen wird.

Bei dem in Fig. 10 gezeigten Ausführungsbeispiel erfolgt die Fluidzufuhr und die Fluidabfuhr an gegenüberliegenden Enden des Fluiderhitzers 1. Eine erste Fluidanschlussbaugruppe 23-1 mit einem ersten Fluidanschluss 24a ist zur Fluidzufuhr am ersten Ende 4 des Metallrohres 2 vorgesehen. Über die erste Fluidanschlussbaugruppe 23-1 in den Fluiderhitzer gelangtes Fluid durchströmt das Metallrohr 2 im Wesentlichen lediglich in einer Richtung (in Fig. 10 von rechts nach links), bevor es über die zweite Fluidanschlussbaugruppe 23-2 mit einem zweiten Fluidanschluss 24b abgeführt wird. Die Fluidanschlussbaugruppen 23-1 bzw. 23-2 sind über jeweilige Dichtmittel in Form von O-Ring-Dichtungen 41b bzw. 41c mit dem Metallrohr 2 fluiddicht und ausreichend druckdicht abgedichtet.

Lediglich der Anschaulichkeit halber außerhalb des Metallrohres 2 gezeichnet ist ein in diesem Ausführungsbeispiel zweiteilig ausgeführter Fluidführungskern 30, der aus einem ersten Fluidführungskernteil 30a sowie einem zweiten Fluidführungskernteil 30b besteht. Über jeweilige Verbindungsabschnitte 30a-1 bzw. 30b-1 können beide Fluidführungskernteile fest miteinander verbunden werden. Hierbei greift ein Teil des ersten Verbindungsabschnitts 30a-1 mit reduziertem Außendurchmesser in einen Teil eines zweiten Verbindungsabschnitts 30b-1 ein. Ein Dichtmittel 41d ist hierzu auf dem Teil des ersten Verbindungsabschnitts 30a-1 vorgesehen, um diesen mit dem zweiten Verbindungsabschnitt 30b-1 fluiddicht zu verbinden. Um die mechanische Festigkeit der Verbindung zwischen den beiden Fluidführungskernteilen 30a, b zu gewährleisten, ist im Beispiel ein Bajonettverschluss vorgesehen. Selbstverständlich kann auch eine Schnapp-Rast-Verbindung oder eine Schraubverbindung oder eine einfache Steckverbindung verwendet werden.

Bei der Fertigung des dargestellten Fluiderhitzers kann der zweiteilig ausgeführte Fluidführungskern hierbei vorteilhafterweise hohl ausgeführt werden, was zu entsprechender Materialeinsparung führt.

Die der jeweiligen Anschlussbaugruppe 23-1 bzw. 23-2 zugewandten Enden 70-1, 70-2 des Fluidführungskerns 30 sind kegelstumpfförmig ausgebildet, wobei sich jeweils am zentralen Ende eine Zentrier- bzw. Verbindungsnase 72-1 bzw. 72-2 befindet. Die jeweilige Verbindungsnase 72-1 bzw. 72-2 greift beim Zusammenbau des Fluiderhitzers in ein korrespondierendes Lager 74-1 der jeweiligen Anschlussbaugruppe 23-1 bzw. 23-2.

An dieser Stelle sei darauf hingewiesen, dass die in der Fig. 10 aufgrund der Perspektive nicht gezeigten Ausführung der dem Fluidkern zugewandten Seite der Anschlussbaugruppe 23-2 mit dem zweiten Fluidanschluss 24b in dieser Hinsicht genau wie der erste Fluidanschluss 23-1 ausgestaltet ist.

In der Anschlussbaugruppe 23-1 für die Fluidzufuhr sind Ausnehmungen 24a-1 in Form von Kreissegmenten zur Fluiddurchführung vorgesehen, die in der Anschlussbaugruppe 23-1 im Inneren in den Fluidanschluss 24a übergehen. Zwischen den Ausnehmungen 24a-1 in Form von Kreissegmenten zur Fluiddurchführung befinden sich Stege 24a-2, die ebenfalls die Form von Kreissegmenten aufweisen und zusammen das Lager 74-1 für die Verbindungsnase 72-1 bilden. An dieser Stelle sei angemerkt, dass die Stege 24a-2 auch eine andere Form als die eines Kreissegments haben können.

Die Ausnehmungen 24a-1 in Form von Kreissegmenten zur Fluiddurchführung in Verbindung mit dem kegelstumpfförmigen Ende 70-1 hat sich als besonders gut hinsichtlich der Strömungsdynamik erwiesen. Insbesondere ist diese Ausführung bei der Überleitung vom ersten Fluidkanalabschnitt 35 in die zweite Fluidanschlussbaugruppe 23-2 hinsichtlich der Vermeidung von Kalkansatz von Vorteil.

Ebenfalls in Fig. 10 dargestellt sind elektrische Leitungen 47, mit welchen die Rohrheizkörper 6a, 6b des dargestellten Fluiderhitzers mit elektrischer Energie versorgt werden. Mittels jeweiligen Kontakthülsen 48a werden die elektrischen Leitungen 47 an den elektrischen Anschlüssen 10a, 10b, 10c, 10d der Rohrheizkörper befestigt. Zur Erhöhung der mechanischen Festigkeit der Verbindung können die Kontakthülsen 48a nach ihrer Positionierung auf den elektrischen Anschlüssen 10a, 10b, 10c, 10d mechanisch verformt werden, wodurch auch die elektrischen Übergangswiderstände der Verbindung verringert werden.

An den den zwei Kontakthülsen 48a jeweils gegenüberliegenden Enden der elektrischen Leitung 47 ist ein Steckverbinder 48b vorgesehen. Er dient zur Verbindung der elektrischen Leitung mit der jeweiligen Anschlussfahne 21 a und 21 d bzw. 21 b und 21 c der beiden Sicherungselemente der Sicherungseinrichtung 21. Die Steckverbinder 48b sind hülsenartig ausgebildet und auf ihrer Außenseite mit einer Isolierung versehen.

Werden die Kontakthülsen 48a wie angedeutet mit den Rohrheizkörpern 6a, 6b verbunden, sind die Rohrheizkörper elektrisch parallel geschaltet, sodass beim Anschluss an eine Spannungsquelle die maximale Heizleistung erreicht wird.

Während die dargestellte zweite Fluidanschlussbaugruppe 23-2 mit dem Fluidablauf mit einem als NTC-widerstand ausgeführten Temperatursensor 42 ausgestattet ist, mit welchem die Fluidtemperatur des erhitzten Fluids gemessen werden kann, ist die erste Fluidanschlussbaugruppe 23-1 in diesem Ausführungsbeispiel deutlich einfacher ausgeführt. So ist kein Temperatursensor zur Messung der Temperatur des zugeführten Fluids vorgesehen. Sofern dies in Anbetracht der vorgesehenen Regelungstechnik jedoch von Vorteil für den Betrieb der dargestellten Anordnung ist, kann auch an der ersten Fluidanschlussbaugruppe 23-1 entsprechend der zweiten Fluidanschlussbaugruppe 23-2 ein weiterer Temperatursensor vorgesehen werden.

Während die vorstehenden Erläuterungen und Ausführungsbeispiele sowie die beigefügten Figuren lediglich zur Veranschaulichung der erfindungsgemäßen Vorrichtungen dienen, sind weitere Merkmalskombinationen und Gestaltungsmöglichkeiten möglich, welche dem Bereich der vorliegenden Erfindungen unterliegen, wie er lediglich durch die beigefügten Ansprüche definiert wird. Insbesondere ist ein zweiteilig ausgeführter Fluidführungskern nicht auf Ausführungsbeispiele beschränkt, bei denen die Fluidzufuhr und die Fluidabfuhr auf gegenüberliegenden Seiten des Metallrohres erfolgen. Ebenso könnte die in Fig. 2B beidseitig ausgeführte Ausklinkung 60 des Wärmeleitblechs 6c bei Bedarf in anderen Ausführungsbeispielen vorgesehen werden.

### Bezugszeichenliste

- 1: Fluiderhitzer
- 2: Metallrohr
- 3: Öffnung
- 4: erster Endbereich
- 5: zweiter Endbereich
- 6: Heizeinrichtung
- 6a, 6b: Rohrheizkörper
- 6c: Wärmeleitmittel
- 7a, 7b, 7c, 7d: Rohrheizkörperende(n)
- 8: Kröpfung
- 9a, 9b, 9c, 9d: Crimpung / Quetschung
- 10a, 10b, 10c, 10d: elektrischer Anschluss
- 11: Montagehalterung
- 12a, 12b: Klammer(n)
- 13: Sensorabschnitt
- 13a: Abwärtshaken
- 13b: Rasthaken
- 13c, 13d: Rastfeder
- 13e: Schlaufe
- 14a, 14b: erster/zweiter Wärmeleitabschnitt
- 15a, 15b: erster/zweiter Verbindungsabschnitt
- 16: Montageabschnitt
- 17a, 17b, 17c, 17d: Durchgangslöcher
- 18a, 18b: erstes/zweites Seitenteil
- 19a, 19b: Montagelasche(n)
- 20: Temperatursensor
- 21: Sicherungseinrichtung
- 21a, 21b, 21c, 21d: Anschlussfahnen
- 22: Niete
- 23, 23-1, 23-2: Fluidanschlussbaugruppe
- 24a, 24b: erster bzw. zweiter Fluidanschluss
- 25: Verschlussstück
- 30: Fluidführungskern
- 31a, 31b: erstes/zweites Ende
- 32: erster Steg
- 33: Durchbrechung bzw. Durchführung
- 34: zweiter Fluidkanalabschnitt
- 35: erster Fluidkanalabschnitt
- 35a: Fluidkanalboden
- 35b: Fluidkanalflanke bzw. -seitenwand
- 35c: wendelförmiger Fluidkanalsteg
- 36, 36a, 36b: erste, zweite bzw. dritte Dichtungsnut
- 37: Tiefenänderung
- 38: Fluidkanalende
- 39: zweiter Steg
- 40: Verschlussgegenstück
- 41a, 41b, 41c, 41d, 41e: Dichtmittel bzw. O-Ring-Dichtung
- 42: Temperatursensor
- 43-1: Verriegelungsnut
- 43-2: Riegelführungsnut
- 44-1, 44-2: erste(r) bzw. zweite(r) Falzung (Falz)
- 45: dritte Nut
- 46: vierte Nut
- 47: elektrische Leitung
- 48a: Kontakthülsen
- 48b: Steckverbinder
- 50: Verschlussstopfen bzw. Verschlusskappe
- 60: Auspaarung bzw. Ausklinkung

## Patentansprüche

1. Fluiderhitzer (1) vom Typ Durchlauferhitzer, wobei der Fluiderhitzer umfasst:
einen Fluidkanal mit wenigstens einem ersten Fluidkanalabschnitt (35),
mindestens ein im Wesentlichen zylindrisches Metallrohr (2), bevorzugt aus einem Edelstahl und besonders bevorzugt mit einem Durchmesser von 10 mm bis 20 mm sowie einer Länge von 120 mm bis 220 mm,
eine Heizeinrichtung (6) mit mindestens einem Rohrheizkörper, bevorzugt mit wenigstens zwei über äquidistante Umfangsabschnitte des Metallrohrs (2) zueinander beabstandeten Rohrheizkörpern (6a, 6b), und Wärmeleitmitteln zur Verteilung der Wärme von der Heizeinrichtung (6) auf mit den Wärmeleitmitteln in Kontakt stehende Bereiche des Metallrohrs (2),
einen Fluidführungskern (30), bevorzugt aus einem Kunststoff, der in dem Metallrohr (2) angeordnet ist und der den ersten Fluidkanalabschnitt (35) zwischen dem Metallrohr und dem Fluidführungskern (30) ausbildet, und
einen ersten Fluidanschluss (24a) für Fluidzufuhrmittel und einen zweiten Fluidanschluss (24b) für Fluidabfuhrmittel, die mit jeweiligen Enden des Fluidkanals in Verbindung stehen,
wobei der erste Fluidkanalabschnitt (35) im Wesentlichen wendelförmig in Form einer Nut in einer Außenoberfläche des Fluidführungskerns verläuft und der erste Fluidkanalabschnitt (35) einen Strömungsweg für das Fluid mit einer hydraulischen Länge bildet, die bevorzugt etwa doppelt, besonders bevorzugt mindestens etwa dreimal so lang wie die Länge des Metallrohrs (2) ist.

2. Fluiderhitzer (1) nach Anspruch 1,
wobei das Wärmeleitmittel zumindest aus einem zwischen der Heizeinrichtung (6) und dem Metallrohr (2) angeordneten Wärmeleitblech (6c), bevorzugt aus Aluminium oder Kupfer bzw. einer Legierung eines dieser Metalle, welches das Metallrohr (2), bevorzugt in einem Abschnitt, mantelförmig umschließt, besteht, und
wobei das Metallrohr (2) und die Bestandteile der Heizeinrichtung (6) bevorzugt mittels entsprechenden Lötverbindungen wärmeleitend verbunden sind.

3. Fluiderhitzer (1) nach einem der vorstehenden Ansprüche,
wobei der mindestens eine Rohrheizkörper (6a, 6b) ein Hochleistungsrohrheizkörper ist mit
einem Mantelrohr aus Metall, insbesondere aus Aluminium oder einer Aluminiumlegierung, welches besonders bevorzugt einen lichten Durchmesser von etwa 8 mm aufweist,
wenigstens einer im Inneren in einem wärmeleitenden Isolationsmittel angeordneten Heizwendel, bevorzugt einer Heizwendel mit einem maximalen äußeren Windungsdurchmesser von 3 mm bis 5,5 mm, und
wobei der Rohrheizkörper besonders bevorzugt einer auf der Oberfläche des Mantelrohres bezogenen Heizleistung von 40 W/cm² bis 75 W/cm² aufweist.

4. Fluiderhitzer nach einem der vorstehenden Ansprüche,
wobei die Heizeinrichtung (6) und das Metallrohr (2) durch eine Montagehalterung (11) aus Metall, bevorzugt aus Aluminium oder Kupfer bzw. einer Legierung eines dieser Metalle, zusammengehalten bzw. umklammert ist,
wobei die Montagehalterung (11) bevorzugt so ausgestaltet ist, dass die Heizeinrichtung, das Metallrohr (2) sowie die Montagehalterung (11), insbesondere durch Klammerabschnitte der Montagehalterung (11), in einer vorbestimmten Anordnung zu einander zusammengehalten werden, und
wobei bevorzugt auf der Montagehalterung (11) angeordnet ist
- eine elektrische Sicherungseinrichtung (21), bevorzugt in Form einer Doppelsicherung zur Unterbrechung der, besonders bevorzugt aller, Stromversorgungsleitungen der Heizeinrichtung (6), mit Anschlüssen, insbesondere Anschlussfahnen (21a, 21b, 21c, 21d) für Steckkontakte, zur elektrischen Verbindung mit elektrischen Anschlüssen (10a, 10b, 10c, 10d) der Heizeinrichtung (6), und
- ggf. ein Anschluss zur Erdung des Fluiderhitzers.

5. Fluiderhitzer (1) nach einem der vorstehenden Ansprüche,
wobei der Fluidführungskern (30) weiter einen, im Wesentlichen koaxial, in seinem Inneren angeordneten zweiten Fluidkanalabschnitt (34) aufweist, der mit dem ersten Fluidkanalabschnitt (35) in Reihe geschaltet ist,
wobei im Bereich eines ersten Endes (4) des Metallrohres (2) eine Fluidanschlussbaugruppe (23) vorgesehen ist, die sowohl den ersten Fluidanschluss (24a) als auch den zweiten Fluidanschluss (24b) aufweist, sodass Fluidzufuhr und Fluidabfuhr im Bereich des ersten Endes (4), des Metallrohres (2) erfolgen, und
wobei im Bereich des zweiten Endes (5) des Metallrohres (2) ein separater oder am Fluidführungskern (30) integraler Verschlussstopfen (50) vorgesehen ist, der das Metallrohr (2), insbesondere fluid- und druckdicht, verschließt, und
wobei insbesondere zwischen dem Fluidführungskern (30) im Bereich des zweiten Endes (5) und dem Verschlussstopfen (50) eine dritte Dichtungsnut (36b) vorgesehen ist, in der Dichtmittel (41c) angeordnet sind, die vom Metallrohr (2) überfasst werden.

6. Fluiderhitzer (1) nach einem der vorstehenden Ansprüche,
wobei zur Messung der Temperatur des zugeführten Fluids im Bereich des ersten Fluidanschlusses (24a) ein Zulauftemperatursensor vorgesehen ist, und/oder
wobei zur Messung der Temperatur des erhitzten Fluids im Bereich des zweiten Fluidanschlusses (24b) ein Ablauftemperatursensor (42) vorgesehen ist.

7. Fluiderhitzer (1) nach einem der vorstehenden Ansprüche,
wobei auf einem mit der Heizeinrichtung (6), insbesondere dem Wärmeleitmittel (6c), wärmeleitend verbundenen Bereich ein Temperatursensor (20), bevorzugt in Form eines NTC-Widerstands, zur Temperaturregelung vorgesehen ist, und
wobei der Temperatursensor (20) benachbart zu jenem Endbereich (4; 5) des Metallrohres (2), an dem sich der zweite Fluidanschluss (24b) befindet, angeordnet ist.

8. Fluiderhitzer (1) nach einem der vorstehenden Ansprüche,
wobei das Wärmeleitmittel wenigstens an einem Endbereich (4, 5) des Metallrohrs (2) derart ausgestaltet ist, insbesondere eine vorbestimmte Ausnehmung bzw. Ausklinkung (60) aufweist, dass eine Wärmeleitung zwischen den Wärmeleitmitteln zum Endbereich (4, 5) des Metallrohrs (2) im Wesentlichen über das Material des Metallrohrs (2) erfolgt.

9. Fluiderhitzer nach einem der vorstehenden Ansprüche,
wobei der erste Fluidkanalabschnitt (35) an einem Fluidkanalende (38), das bevorzugt als ein nicht beheizter Abschnitt ausgeführt ist, in Nähe des zweiten Fluidanschlusses (24b) in der Tiefe und/oder in der Breite zunimmt.

10. Fluidanschlussbaugruppe (23), insbesondere für einen Fluiderhitzer (1) gemäß einem der Ansprüche 6 bis 9, wobei die Fluidanschlussbaugruppe (23) umfasst:
ein erstes Teil (I), welches vorzugsweise als integraler Bestandteil, mit dem Fluidführungskern (30) verbunden ist,
ein zweites Teil (II) mit dem ersten Fluidanschluss (24a) oder dem zweiten Fluidanschluss (24b),
wobei das zweite Teil (II) im Wesentlichen die Form einer Hülse bzw. Buchse aufweist, die zumindest teilweise den ersten Teil (II) und ggf. teilweise den Fluidführungskern (30) umfasst, und so ausgestaltet ist, dass der erste Fluidanschluss (24a) oder der zweite Fluidanschluss (24b) erhitztes Fluid im Wesentlichen radial vom ersten Fluidkanalabschnitt (35) zuführt oder abführt,
wobei der erste Teil (I) und/oder der Fluidführungskern (30) mit dem zweiten Teil (II) mittels einer Verbindungseinrichtung, wie beispielsweise einer Schnapp-Rastverbindung, einer Schaubverbindung, einer Bajonettverbindung oder dergleichen, miteinander verbunden sind, sodass insbesondere eine teilweise, bevorzugt im wesentlichen ein Fluidkanalende (38) mit dem ersten Fluidanschluss (24a) oder dem zweiten Fluidanschluss (24b) fluchtet.

11. Fluidanschlussbaugruppe (23) nach Anspruch 10,
wobei sowohl der erste Fluidanschluss (24a) als auch der zweite Fluidanschluss (24b) am ersten Ende (3) des Metallrohres (2) ausgeführt sind und der Fluidführungskern (30) weiter den, im Wesentlichen koaxial, in seinem Inneren angeordneten zweiten Fluidkanalabschnitt (34) aufweist, der mit dem ersten Fluidkanalabschnitt (35) in Reihe geschaltet ist, und
wobei der erste Fluidanschluss (24a) zu erhitzendes Fluid im Wesentlichen axial in den zweiten Fluidkanalabschnitt (34) zuführt und der zweite Fluidanschluss (24b) erhitztes Fluid im Wesentlichen radial aus dem ersten Fluidkanalabschnitt (35) abführt.

12. Fluidanschlussbaugruppe (23) nach Anspruch 11,
wobei erste Dichtmittel (41a) in einer ersten Dichtungsnut (36) zwischen dem Fluidführungskern (30) und dem zweiten Teil (II) den ersten Teil (I) gegenüber dem zweiten Teil (II) dichtend umlaufen, und
wobei zweite Dichtmittel (41b) innerhalb einer zweiten Dichtungsnut (36a) auf einer dem ersten Fluidanschluss (24a) gegenüberliegenden Seite des ersten Teils (I) den zweiten Teil (II) gegenüber
- der Innenoberfläche des Metallrohrs (2) dichtend umlaufen und wobei die zweiten Dichtmittel (41b) oder eine die Dichtmittel (41b) beidseitig säumende Struktur des zweiten Teils (II) vom Metallrohr (2) überfasst und mittels einer Falzung (44-1) des Metallrohrs (2) formschlüssig hinterschnitten werden, oder
- der Außenoberfläche des Metallrohrs (2) dichtend umlaufen.

13. Fluidanschlussbaugruppe (23-1; 23-2) nach Anspruch 11,
wobei die Fluidanschlussbaugruppe (23-1; 23-2) im Bereich des ersten Endes (4) bzw. des zweiten Endes (5) des Metallrohres (2) als eine erste Fluidanschlussbaugruppe (23-1) mit dem ersten Fluidanschluss (24a) bzw. zweite Fluidanschlussbaugruppe (23-2) mit dem zweiten Fluidanschluss (24b) vorgesehen ist,
wobei der erste Fluidanschluss (24a) und/oder zweite Fluidanschluss (24b) im Wesentlichen einen kreisförmigen lichten Fluidführungsquerschnitt aufweist.

14. Fluidanschlussbaugruppe (23; 23-1; 23-2) nach einem der vorstehenden Ansprüche 10 bis 13,
wobei die Fluidanschlussbaugruppe (23; 23-1, 23-2) und/oder ggf. der Verschlussstopfen (50) mittels einer jeweiligen plastischen Verformung, insbesondere einer Falzung (44-1, 44-2), im jeweiligen Endbereich (4, 5) des Metallrohres (2) formschlüssig, bevorzugt in Form einer Hinterschneidung, im Metallrohr (2) unlösbar festgelegt ist bzw. sind.

15. Fluiderhitzer (1) mit einer Fluidanschlussbaugruppe (23; 23-1; 23-2) gemäß einem der Ansprüche 10 bis 14,
wobei der Fluidführungskern (30) zweiteilig ausgeführt ist, insbesondere mindestens zwei Fluidführungskernteile (30a, 30b) umfasst, die, bevorzugt mittels einer Schnapp-Rast- oder Schraub- oder Bajonettverbindung oder dergleichen, miteinander in vorbestimmter Anordnung zueinander verbindbar sind, und
wobei jeweilige Enden des Fluidführungskerns (30) kegelstumpfförmig ausgeführt sind und ein axiales Verbindungselement zur Verbindung mit der jeweiligen Anschlussbaugruppe (23-1, 23-2) aufweisen.
